# EUROPEAN PATENT APPLICATION

(11) **EP 4 152 807 A1**
(43) Date of publication of application: **22.03.2023**
(21) Application number: 21826811.8
(22) Date of filing: 10.06.2021
(51) Int. Cl.: H04W 28/02, H04W 28/06

(54) **COMMUNICATION METHOD AND APPARATUS**

(30) Priority: 15.06.2020 CN 202010544526
(71) Applicant: HUAWEI TECHNOLOGIES CO., LTD., Shenzhen, Guangdong 518129 (CN)
(72) Inventor: YOU, Chunhua, Shenzhen, Guangdong 518129 (CN); XU, Xiaoying, Shenzhen, Guangdong 518129 (CN); ZENG, Qinghai, Shenzhen, Guangdong 518129 (CN)
(74) Representative: MERH-IP Matias Erny Reichl Hoffmann Patentanwälte PartG mbB
(86) International application number: PCT/CN2021/099331
(87) International publication number: WO 2021/254238

(57) **Abstract**

This application relates to the field of communication technologies, and discloses a communication method and apparatus. The method includes: A first access network device receives first uplink data from a terminal device; and sends a request message to a core network device, where the request message requests path switching of user plane data of the terminal device, the request message includes first information, and the first information indicates a first PDU session corresponding to the first uplink data. In this manner, because the request message sent by the first access network device to the core network device may include the first information, the core network device may perform admission control on PDU sessions of the terminal device with reference to the first information. This can improve appropriateness of performing admission control on the PDU sessions by the core network device.

## Description

### CROSS-REFERENCE TO RELATED APPLICATION

This application claims priority to Chinese Patent Application No. 202010544526.1, filed with the China National Intellectual Property Administration on June 15, 2020 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A protocol data unit (protocol data unit, PDU) session is a session between a terminal device and a data network (data network, DN), and is used to provide a PDU connectivity service. The PDU connectivity service may be a service of PDU exchange between the terminal device and the DN.

A new RRC state, namely, an RRC inactive state (inactive state), is introduced into a 5th generation (the 5th generation, 5G) communication system. A terminal device in the RRC inactive state suspends an RRC connection to an access network device, and does not need to continuously monitor downlink data, so that a power saving effect that is the same as that in an idle state is achieved. However, both the terminal device in the RRC inactive state and the access network device store context information of the terminal device.

However, how a core network device performs admission control on PDU sessions of the terminal device when the terminal device in the RRC inactive state needs to transmit data still needs to be further studied.

### SUMMARY

In view of this, this application provides a communication method and apparatus, to improve appropriateness of performing admission control on PDU sessions by a core network device.

According to a first aspect, an embodiment of this application provides a communication method. The method may be applied to a first access network device, or may be applied to a chip inside the first access network device. For example, the method is applied to the first access network device. In the method, the first access network device receives first uplink data from a terminal device; and sends a request message to a core network device, where the request message requests path switching of user plane data of the terminal device, the request message includes first information, and the first information indicates a first PDU session corresponding to the first uplink data.

In this manner, because the request message sent by the first access network device to the core network device may include the first information, the core network device may perform admission control on PDU sessions of the terminal device with reference to the first information. This can improve appropriateness of performing admission control on the PDU sessions by the core network device. For example, the core network device may determine, based on the first information, that uplink data needs to be transmitted through the first PDU session, and then may preferentially admit the first PDU session, so that a problem that data cannot be normally transmitted because the first PDU session is released is effectively avoided.

In a possible design, the method further includes: determining a logical channel corresponding to the first uplink data; obtaining indication information from a second access network device, where the indication information indicates that the logical channel corresponds to the first protocol data unit PDU session, or the indication information indicates a correspondence between the logical channel and the first PDU session; and then determining, based on the logical channel corresponding to the first uplink data and the indication information, the first PDU session corresponding to the first uplink data.

In a possible design, the method further includes: receiving an RRC connection resume request from the terminal device, where the first uplink data and the RRC connection resume request are carried in a same message.

In this manner, the first uplink data and the RRC connection resume request are carried in the same message, that is, the first uplink data and the RRC connection resume request are transmitted at the same time. In other words, the terminal device may transmit the first uplink data in an inactive state, so that it can be ensured that the first uplink data is transmitted in a timely manner.

In a possible design, the request message further includes at least one of the following: a quality of service QoS flow identifier QFI corresponding to the first uplink data; QoS parameter information corresponding to the first uplink data; a data amount of the first uplink data; a remaining uplink data amount of the first PDU session; second information, where the second information indicates a second PDU session corresponding to uplink data that is expected to arrive; a QFI corresponding to the uplink data that is expected to arrive; QoS parameter information corresponding to the uplink data that is expected to arrive; a remaining uplink data amount of a third PDU session; and third information, where the third information indicates an RRC state of the terminal device.

In this manner, because the request message may include the foregoing various possible information, a reference basis is provided from a plurality of dimensions for the core network device to perform admission control on the PDU sessions. This can more effectively improve appropriateness of performing admission control on the PDU sessions by the core network device.

In a possible design, the method further includes: obtaining the second information from the terminal device, where the second information is determined by the terminal device based on historical data transmission information of the second PDU session. In this case, because the first access network device may directly obtain the second information from the terminal device, processing load of the first access network device can be effectively reduced. Alternatively, the method further includes: obtaining historical data transmission information of the second PDU session from the second access network device, and determining the second information based on the historical data transmission information of the second PDU session.

In a possible design, the method further includes: receiving a buffer status report from the terminal device, where the buffer status report indicates the remaining uplink data amount of the first PDU session and/or the remaining uplink data amount of the third PDU session.

In a possible design, the method further includes: receiving a response message of the request message from the core network device, where the response message includes an identifier of an admitted PDU session and/or an identifier of a released PDU session.

In a possible design, the admitted PDU session includes the first PDU session; or the released PDU session includes the first PDU session.

In a possible design, the first information includes an identifier of the first PDU session.

According to a second aspect, an embodiment of this application provides a communication method. The method may be applied to a core network device, or may be applied to a chip inside the core network device. For example, the method is applied to the core network device. In the method, the core network device receives a request message from an access network device, where the request message requests path switching of user plane data of a terminal device, the request message includes first information, and the first information indicates a first PDU session corresponding to first uplink data; and determines an admitted PDU session and/or a rejected PDU session based on the request message.

In a possible design, the request message further includes at least one of the following: a QFI corresponding to the first uplink data; QoS parameter information corresponding to the first uplink data; a data amount of the first uplink data; a remaining uplink data amount of the first PDU session; second information, where the second information indicates a second PDU session corresponding to uplink data that is expected to arrive; a QFI corresponding to the uplink data that is expected to arrive; QoS parameter information corresponding to the uplink data that is expected to arrive; a remaining uplink data amount of a third PDU session; and third information, where the third information indicates an RRC state of the terminal device.

In a possible design, the method further includes: sending a response message of the request message to the access network device, where the response message includes an identifier of the admitted PDU session and/or an identifier of the rejected PDU session.

In a possible design, the admitted PDU session includes the first PDU session; or the released PDU session includes the first PDU session.

In a possible design, the first information includes an identifier of the first PDU session.

It should be noted that the communication method provided in the second aspect corresponds to the first aspect. Therefore, for beneficial effects of related technical features in the second aspect, refer to descriptions in the first aspect. Details are not described again.

According to a third aspect, an embodiment of this application provides a communication method. The method may be applied to a first core network device, or may be applied to a chip inside the first core network device. For example, the method is applied to the first core network device. In the method, the first core network device receives a request message from an access network device, where the request message requests path switching of user plane data of a terminal device, the request message includes first information, and the first information indicates a first PDU session corresponding to first uplink data; sends the first information to a second core network device based on the request message; and receives an indication message from the second core network device, where the indication message indicates an admitted PDU session and/or a released PDU session.

In this manner, the first core network device may send the first information to the second core network device, so that the second core network device may perform admission control on PDU sessions of the terminal device with reference to the first information. This can improve appropriateness of performing admission control on the PDU sessions by the second core network device.

In a possible design, the method further includes: sending, to the second core network device, at least one of the following: a QFI corresponding to the first uplink data; QoS parameter information corresponding to the first uplink data; a data amount of the first uplink data; a remaining uplink data amount of the first PDU session; second information, where the second information indicates a second PDU session corresponding to uplink data that is expected to arrive; a QFI corresponding to the uplink data that is expected to arrive; QoS parameter information corresponding to the uplink data that is expected to arrive; a remaining uplink data amount of a third PDU session; and third information, where the third information indicates an RRC state of the terminal device.

In this manner, because the first core network device may send various possible information to the second core network device, a reference basis is provided from a plurality of dimensions for the second core network device to perform admission control on the PDU sessions. This can more effectively improve appropriateness of performing admission control on the PDU sessions by the second core network device.

According to a fourth aspect, an embodiment of this application provides a communication method. The method may be applied to a second core network device, or may be applied to a chip inside the second core network device. For example, the method is applied to the second core network device. In the method, the second core network device receives first information from a first core network device, where the first information indicates a first PDU session corresponding to first uplink data; and sends indication information to the first core network device based on the first information, where the indication information indicates an admitted PDU session and/or a released PDU session.

In a possible design, the method further includes: receiving, from the first core network device, at least one of the following: a QFI corresponding to the first uplink data; QoS parameter information corresponding to the first uplink data; a data amount of the first uplink data; a remaining uplink data amount of the first PDU session; second information, where the second information indicates a second PDU session corresponding to uplink data that is expected to arrive; a QFI corresponding to the uplink data that is expected to arrive; QoS parameter information corresponding to the uplink data that is expected to arrive; a remaining uplink data amount of a third PDU session; and third information, where the third information indicates an RRC state of the terminal device.

It should be noted that the communication method provided in the fourth aspect corresponds to the third aspect. Therefore, for beneficial effects of related technical features in the fourth aspect, refer to descriptions in the third aspect. Details are not described again.

According to a fifth aspect, an embodiment of this application provides a communication method. The method may be applied to an access network device, or may be applied to a chip inside the access network device. For example, the method is applied to the access network device. In the method, the access network device obtains information, where the information indicates a PDU session corresponding to uplink data that is expected to arrive; and sends a request message to a core network device, where the request message requests path switching of user plane data of a terminal device, and the request message includes the information.

In this manner, because the request message sent by the access network device to the core network device may include the information, the core network device may perform admission control on PDU sessions of the terminal device with reference to the information. This can improve appropriateness of performing admission control on the PDU sessions by the core network device. For example, the core network device may determine, based on the information, that uplink data is expected to be transmitted through a first PDU session, and then may preferentially admit the first PDU session, so that a problem that data cannot be normally transmitted because the first PDU session is released is effectively avoided.

In a possible design, the request message further includes at least either of the following: a QFI corresponding to the uplink data that is expected to arrive; and QoS parameter information corresponding to the uplink data that is expected to arrive.

According to a sixth aspect, an embodiment of this application provides a communication method. The method may be applied to an access network device, or may be applied to a chip inside the access network device. For example, the method is applied to the access network device. In the method, the access network device obtains information, where the information indicates an RRC state of a terminal device; and sends a request message to a core network device, where the request message requests path switching of user plane data of the terminal device, and the request message includes the information.

In this manner, because the request message sent by the access network device to the core network device may include the information, the core network device may perform admission control on PDU sessions of the terminal device with reference to the information. This can improve appropriateness of performing admission control on the PDU sessions by the core network device. For example, if the RRC state of the terminal device is an inactive state, the core network device may reject or release a part or all of the PDU sessions of the terminal device. If the RRC state of the terminal device is a connected state, the core network device needs to admit all the PDU sessions of the terminal device as much as possible, to avoid impact on data transmission of the terminal device.

According to a seventh aspect, an embodiment of this application provides a communication system. The communication system may include a first access network device and a core network device. The first access network device may be configured to perform the method in any possible design or implementation of the first aspect, the fifth aspect, or the sixth aspect, and the core network device may be configured to perform the method in any possible design or implementation of the second aspect.

In a possible design, the communication system may further include a second access network device. The second access network device is a last serving access network device of a terminal device. For example, the second access network device may be configured to send context information of the terminal device to the first access network device; and/or the second access network device may be configured to send historical data transmission information of a PDU session of the terminal device to the first access network device.

According to an eighth aspect, an embodiment of this application provides a communication system. The communication system may include a first core network device and a second core network device. The first core network device may be configured to perform the method in any possible design or implementation of the third aspect, and the second core network device may be configured to perform the method in any possible design or implementation of the fourth aspect.

In a possible design, the communication system may further include a first access network device. The first access network device may be configured to perform the method in any possible design or implementation of the first aspect, the fifth aspect, or the sixth aspect.

In a possible design, the communication system may further include a second access network device. The second access network device is a last serving access network device of a terminal device. For example, the second access network device may be configured to send context information of the terminal device to the first access network device; and/or the second access network device may be configured to send historical data transmission information of a PDU session of the terminal device to the first access network device.

According to a ninth aspect, this application provides a communication apparatus. The communication apparatus may be an access network device (for example, a first access network device) or a chip disposed inside the access network device. The communication apparatus has a function of implementing the first aspect, the fifth aspect, or the sixth aspect. For example, the communication apparatus includes a corresponding module, unit, or means (means) for performing steps in the first aspect, the fifth aspect, or the sixth aspect. The module, unit, or means may be implemented by software, hardware, or hardware executing corresponding software.

In a possible design, the communication apparatus includes a processing unit and a communication unit. The communication unit may be configured to send and receive a signal, to implement communication between the communication apparatus and another apparatus. For example, the communication unit is configured to receive configuration information from a terminal device. The processing unit may be configured to perform some internal operations of the communication apparatus. Functions performed by the processing unit and the communication unit may correspond to the steps in the first aspect, the fifth aspect, or the sixth aspect.

In a possible design, the communication apparatus includes a processor. The processor may be configured to be coupled to a memory. The memory may store a computer program or instructions necessary for implementing the functions in the first aspect, the fifth aspect, or the sixth aspect. The processor may execute the computer program or the instructions stored in the memory. When the computer program or the instructions are executed, the communication apparatus is enabled to implement the method in any possible design or implementation of the first aspect, the fifth aspect, or the sixth aspect.

In a possible design, the communication apparatus includes a processor and a memory. The memory may store a computer program or instructions necessary for implementing the functions in the first aspect, the fifth aspect, or the sixth aspect. The processor may execute the computer program or the instructions stored in the memory. When the computer program or the instructions are executed, the communication apparatus is enabled to implement the method in any possible design or implementation of the first aspect, the fifth aspect, or the sixth aspect.

In a possible design, the communication apparatus includes a processor and an interface circuit. The processor is configured to: communicate with another apparatus through the interface circuit, and perform the method in any possible design or implementation of the first aspect, the fifth aspect, or the sixth aspect.

According to a tenth aspect, this application provides a communication apparatus. The communication apparatus may be a core network device (for example, a first core network device or a second core network device) or a chip disposed inside the core network device. The communication apparatus has a function of implementing the second aspect, the third aspect, or the fourth aspect. For example, the communication apparatus includes a corresponding module, unit, or means for performing steps in the second aspect, the third aspect, or the fourth aspect. The function, unit, or means may be implemented by software, hardware, or hardware executing corresponding software.

In a possible design, the communication apparatus includes a processing unit and a communication unit. The communication unit may be configured to send and receive a signal, to implement communication between the communication apparatus and another apparatus. For example, the communication unit is configured to send system information to a terminal device. The processing unit may be configured to perform some internal operations of the communication apparatus. Functions performed by the processing unit and the communication unit may correspond to the steps in the second aspect, the third aspect, or the fourth aspect.

In a possible design, the communication apparatus includes a processor. The processor may be configured to be coupled to a memory. The memory may store a computer program or instructions necessary for implementing the functions in the second aspect, the third aspect, or the fourth aspect. The processor may execute the computer program or the instructions stored in the memory. When the computer program or the instructions are executed, the communication apparatus is enabled to implement the method in any possible design or implementation of the second aspect, the third aspect, or the fourth aspect.

In a possible design, the communication apparatus includes a processor and a memory. The memory may store a computer program or instructions necessary for implementing the functions in the second aspect, the third aspect, or the fourth aspect. The processor may execute the computer program or the instructions stored in the memory. When the computer program or the instructions are executed, the communication apparatus is enabled to implement the method in any possible design or implementation of the second aspect, the third aspect, or the fourth aspect.

In a possible design, the communication apparatus includes a processor and an interface circuit. The processor is configured to: communicate with another apparatus through the interface circuit, and perform the method in any possible design or implementation of the second aspect, the third aspect, or the fourth aspect.

It may be understood that, in the ninth aspect or the tenth aspect, the processor may be implemented by using hardware or software. When implemented by using hardware, the processor may be a logic circuit, an integrated circuit, or the like. When implemented by using software, the processor may be a general-purpose processor, and is implemented by reading software code stored in the memory. In addition, there may be one or more processors and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in this embodiment of this application.

According to an eleventh aspect, this application provides a computer-readable storage medium. The computer storage medium stores computer-readable instructions. When a computer reads and executes the computer-readable instructions, the computer is enabled to perform the method in any possible design of the first aspect to the sixth aspect.

According to a twelfth aspect, this application provides a computer program product. When a computer reads and executes the computer program product, the computer is enabled to perform the method in any possible design of the first aspect to the sixth aspect.

According to a thirteenth aspect, this application provides a chip. The chip includes a processor. The processor is coupled to a memory, and is configured to read and execute a software program stored in the memory, to implement the method in any possible design of the first aspect to the sixth aspect.

These aspects or other aspects in this application are clearer and more intelligible in descriptions in the following embodiments.

### BRIEF DESCRIPTION OF DRAWINGS

FIG. 1 is a schematic diagram of a network architecture to which an embodiment of this application is applicable;
FIG. 2a is a diagram of an example of a protocol layer structure between a terminal device and an access network device according to an embodiment of this application;
FIG. 2b is a schematic diagram of a CU-DU split architecture according to an embodiment of this application;
FIG. 2c is a schematic diagram of another CU-DU split architecture according to an embodiment of this application;
FIG. 2d is a schematic diagram of distribution of air interface protocol stacks according to an embodiment of this application;
FIG. 3 is a schematic diagram of a PDU session establishment procedure according to an embodiment of this application;
FIG. 4 is a possible schematic flowchart in which a terminal device switches between an RRC connected state and an RRC inactive state according to an embodiment of this application;
FIG. 5 is a schematic flowchart corresponding to a communication method according to an embodiment of this application;
FIG. 6 is a possible example block diagram of an apparatus according to an embodiment of this application;
FIG. 7 is a schematic diagram of a structure of an access network device according to an embodiment of this application; and
FIG. 8 is a schematic diagram of a structure of a core network device according to an embodiment of this application.

### DESCRIPTION OF EMBODIMENTS

The following clearly and completely describes technical solutions in embodiments of this application with reference to the accompanying drawings in embodiments of this application.

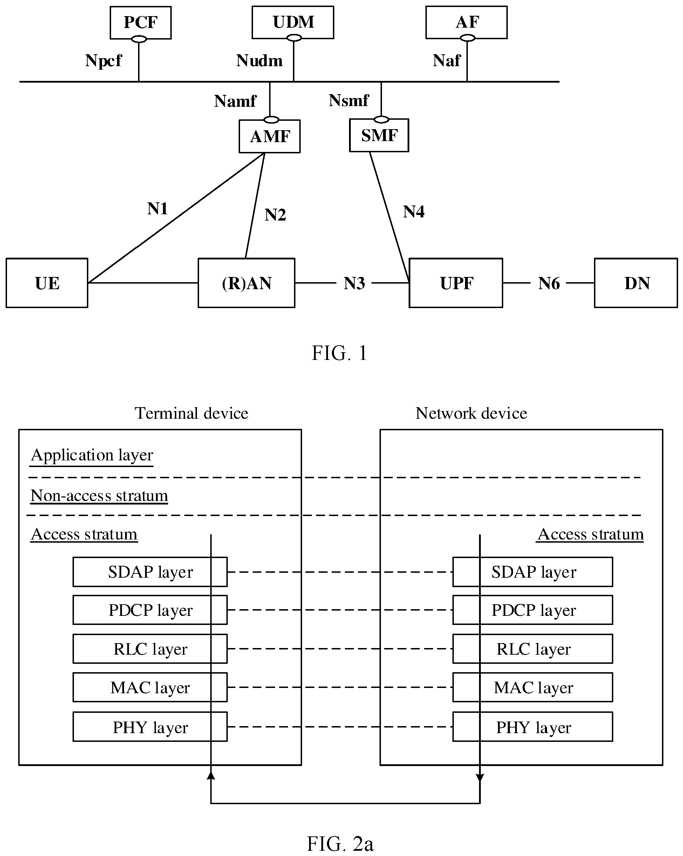

FIG. 1 is a schematic diagram of a network architecture to which an embodiment of this application is applicable. As shown in FIG. 1, a terminal device may access a wireless network, to obtain a service of an external network (for example, a data network (data network, DN)) through the wireless network, or communicate with another device through the wireless network, for example, may communicate with another terminal device. The wireless network includes a radio access network (radio access network, RAN) and a core network (core network, CN). The RAN may also be referred to as an access network (radio access network, AN), and is configured to enable the terminal device to access the wireless network. The CN is configured to: manage the terminal device, and provide a gateway for communicating with the DN.

The following separately describes in detail the terminal device, the RAN, and the CN in FIG. 1.

### 1. Terminal device

The terminal device may also be referred to as user equipment (user equipment, UE), and includes a device that provides voice and/or data connectivity to a user, for example, may include a handheld device having a wireless connection function, or a processing device connected to a wireless modem. The terminal device may communicate with a core network through a radio access network (radio access network, RAN), and exchange a voice and/or data with the RAN. The terminal device may include a wireless terminal device, a mobile terminal device, a device-to-device communications (device-to-device, D2D) terminal device, a vehicle-to-everything (vehicle-to-everything, V2X) terminal device, and a machine-to-machine/machine-type communications (machine-to-machine/machine-type communications, M2M/MTC) terminal device, an internet of things (internet of things, IoT) terminal device, a subscriber unit, a subscriber station, a mobile station, a remote station, an access point (access point, AP), a remote terminal, an access terminal, a user terminal, a user agent, user equipment, or the like. For example, the terminal device may include a mobile phone (or referred to as a "cellular" phone), a computer having a mobile terminal device, or a portable, pocket-sized, handheld, or computer built-in mobile apparatus. For example, the terminal device may include a device such as a personal communications service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device alternatively includes a limited device, for example, a device having low power consumption, a device having a limited storage capability, or a device having a limited computing capability. For example, the terminal device includes an information sensing device such as a barcode, radio frequency identification (radio frequency identification, RFID), a sensor, a global positioning system (global positioning system, GPS), or a laser scanner.

In embodiments of this application, an apparatus configured to implement a function of the terminal device may be a terminal device, or may be an apparatus that can support the terminal device in implementing the function, for example, a chip system, or a combined component or a component that can implement the function of the terminal device. The apparatus may be disposed in the terminal device. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is the terminal device.

### 2. RAN

The RAN may include one or more RAN devices, and an interface between the RAN device and the terminal device may be a Uu interface (or referred to as an air interface). Certainly, in future communication, names of these interfaces may remain unchanged, or may be replaced with other names. This is not limited in this application.

The RAN device is a node or a device that enables the terminal device to access the wireless network, and the RAN device may also be referred to as an access network device or a base station. For example, the access network device includes but is not limited to: a next-generation base station (generation NodeB, gNB) in a 5G communication system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station ((home evolved NodeB, HeNB) or (home NodeB, HNB)), a baseband unit (baseBand unit, BBU), a transmission reception point (transmitting and receiving point, TRP), a transmission point (transmitting point, TP), or a mobile switching center.

In embodiments of this application, an apparatus configured to implement a function of the access network device may be an access network device, or may be an apparatus that can support the access network device in implementing the function, for example, a chip system, or a combined component or a component that can implement the function of the access network device. The apparatus may be disposed in the access network device. In the technical solutions provided in embodiments of this application, the technical solutions provided in embodiments of this application are described by using an example in which the apparatus configured to implement the function of the access network device is the access network device.

### (1) Protocol layer structure

Communication between the RAN device and the terminal device complies with a specific protocol layer structure. For example, a control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include a PDCP layer, an RLC layer, a MAC layer, and a physical layer. In a possible implementation, a service data adaptation (service data adaptation protocol, SDAP) layer may be further included above the PDCP layer.

Data transmission between the access network device and the terminal device is used as an example. Data transmission needs to pass through a user plane protocol layer such as the SDAP layer, the PDCP layer, the RLC layer, the MAC layer, or the physical layer. The SDAP layer, the PDCP layer, the RLC layer, the MAC layer, and the physical layer may also be collectively referred to as an access stratum. For example, at least one data radio bearer (data radio bearer, DRB) is established between the access network device and the terminal device to transmit data. Each DRB may correspond to a set of functional entities, for example, include one PDCP layer entity, at least one RLC layer entity corresponding to the PDCP layer entity, at least one MAC layer entity corresponding to the at least one RLC layer entity, and at least one physical layer entity corresponding to the at least one MAC layer entity. It should be noted that at least one signaling radio bearer (signaling radio bearer, SRB) may be further established between the access network device and the terminal device to transmit signaling, and the DRB and the SRB may be collectively referred to as a radio bearer (radio bearer, RB).

Downlink data transmission is used as an example. FIG. 2a is a schematic diagram of downlink data transmission between layers. In FIG. 2a, a downward arrow represents data sending, and an upward arrow represents data receiving. After obtaining data from an upper layer, an SDAP layer entity may map the data to a PDCP layer entity of a corresponding DRB based on a quality of service flow identifier (QoS flow indicator, QFI) of the data. The PDCP layer entity may transmit the data to at least one RLC layer entity corresponding to the PDCP layer entity. Then, the at least one RLC layer entity transmits the data to a corresponding MAC layer entity. The MAC layer entity generates a transport block. Then, a corresponding physical layer entity performs wireless transmission. Data is correspondingly encapsulated at each layer. Data received by a layer from an upper layer of the layer is considered as a service data unit (service data unit, SDU) of the layer. After being encapsulated at the layer, the data becomes a PDU, and is then transferred to a next layer. For example, data received by the PDCP layer entity from an upper layer is referred to as a PDCP SDU, and data sent by the PDCP layer entity to a lower layer is referred to as a PDCP PDU. Data received by the RLC layer entity from an upper layer is referred to as an RLC SDU, and data sent by the RLC layer entity to a lower layer is referred to as an RLC PDU. Data may be transmitted between different layers through a corresponding channel. For example, data may be transmitted between the RLC layer entity and the MAC layer entity through a logical channel (logical channel, LCH), and data may be transmitted between the MAC layer entity and the physical layer entity through a transport channel (transport channel). For example, it can be further learned from FIG. 2a that the terminal device further has an application layer and a non-access stratum. The application layer may be configured to provide a service for an application program installed on the terminal device, and the non-access stratum may be configured to forward user data.

### (2) CU and DU

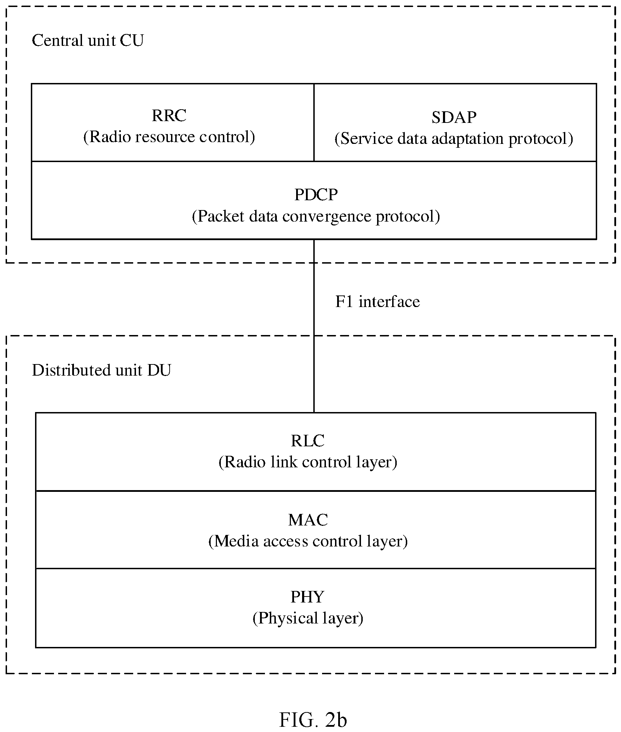

In embodiments of this application, the RAN device may include one or more central units (centralized units, CUs) and one or more distributed units (distributed units, DUs), and a plurality of DUs may be centrally controlled by one CU. For example, an interface between the CU and the DU may be referred to as an F1 interface. A control plane (control panel, CP) interface may be an F1-C interface, and a user plane (user panel, UP) interface may be an F1-U interface. The CU and the DU may be obtained through division based on a protocol layer of a wireless network. For example, as shown in FIG. 2b, functions of the PDCP layer and protocol layers above the PDCP layer are set on the CU, and functions of protocol layers (for example, the RLC layer and the MAC layer) below the PDCP layer are set on the DU.

It may be understood that division of processing functions of the CU and the DU based on the protocol layers is merely an example, and the processing functions of the CU and the DU may alternatively be divided in another manner. For example, functions of the protocol layers above the PDCP layer are set on the CU, and functions of the PDCP layer and the protocol layers below the PDCP layer are set on the DU. For another example, the CU or the DU may have functions of more protocol layers through division. For another example, the CU or the DU may alternatively have some processing functions of a protocol layer through division. In a design, some functions of the RLC layer and functions of a protocol layer above the RLC layer are deployed on the CU, and remaining functions of the RLC layer and functions of a protocol layer below the RLC layer are deployed on the DU. In another design, functions of the CU or the DU may alternatively be divided based on a service type or another system requirement, for example, may be divided based on a delay. Functions whose processing time needs to satisfy a delay requirement are deployed on the DU, and functions whose processing time does not need to satisfy the delay requirement are deployed on the CU. In another design, the CU may alternatively have one or more functions of a core network. For example, the CU may be disposed on a network side for ease of centralized management; and the DU may have a plurality of radio frequency functions, or the radio frequency functions may be disposed remotely. This is not limited in embodiments of this application.

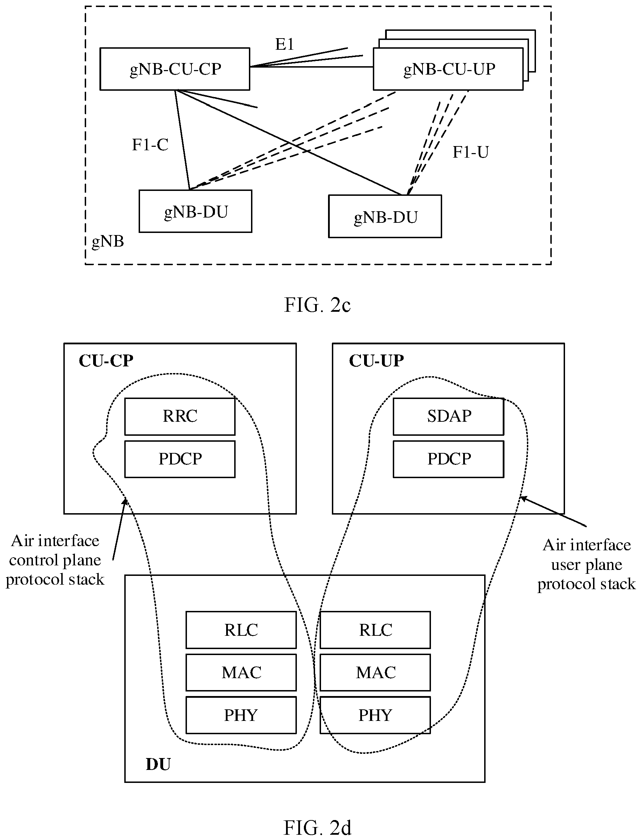

For example, functions of the CU may be implemented by one entity or different entities. For example, as shown in FIG. 2c, the functions of the CU may be further divided, that is, a control plane and a user plane are separated, and are implemented by using different entities, which are respectively a control plane CU entity (namely, a CU-CP entity) and a user plane CU entity (namely, a CU-UP entity). The CU-CP entity and the CU-UP entity may be coupled to the DU, to jointly complete a function of the RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs.

Based on FIG. 2c, FIG. 2d is a schematic diagram of distribution of air interface protocol stacks. As shown in FIG. 2d, for both a user plane and a control plane, an air interface protocol stack may be that an RLC, a MAC, and a PHY are on a DU, and a PDCP and protocol layers above the PDCP are on a CU.

It should be noted that, in the architectures shown in FIG. 2b to FIG. 2d, signaling generated by the CU may be sent to the terminal device by using the DU, or signaling generated by the terminal device may be sent to the CU by using the DU. The DU may transparently transmit the signaling to the terminal device or the CU by directly encapsulating the signaling at a protocol layer without parsing the signaling. In the following embodiments, if transmission of the signaling between the DU and the terminal device is described, sending or receiving the signaling by the DU includes the scenario. For example, signaling of the RRC layer or the PDCP layer is finally processed as signaling of the physical layer and sent to the terminal device, or signaling of the RRC layer or the PDCP layer is converted from received signaling of the physical layer. In this architecture, the signaling of the RRC layer or the PDCP layer may also be considered to be sent by the DU, or sent by the DU and a radio frequency apparatus.

### 3. CN

The CN may include one or more core network devices or one or more core network elements. The 5G communication system is used as an example. The CN may include an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, and the like.

The AMF network element is a control plane network element provided by an operator network, and is responsible for access control and mobility management of access of the terminal device to the operator network, for example, including functions such as mobility status management, allocation of a temporary user identity, and user authentication and authorization.

The SMF network element is a control plane network element provided by the operator network, and is responsible for managing a PDU session of the terminal device. The PDU session is a channel used to transmit a PDU, and the terminal device needs to transmit a PDU to a DN through the PDU session. The SMF network element is responsible for establishment, maintenance, deletion, and the like of the PDU session. The SMF network element includes functions related to a session, for example, session management (for example, session establishment, modification, and release, including tunnel maintenance between the UPF and the RAN), selection and control of the UPF network element, service and session continuity (service and session continuity, SSC) mode selection, and roaming.

The UPF network element is a gateway provided by the operator, and is a gateway for communication between the operator network and the DN. The UPF network element includes functions related to a user plane, for example, data packet routing and transmission, packet detection, quality of service (quality of service, QoS) processing, lawful interception, uplink packet detection, and downlink data packet storage.

The PCF network element is a control plane function provided by the operator, and is configured to provide a policy of the PDU session for the SMF network element. The policy may include a charging-related policy, a QoS-related policy, an authorization-related policy, and the like.

The UDM network element is a control plane network element provided by the operator, and is responsible for storing information such as a subscription permanent identifier (subscription permanent identifier, SUPI), and subscription data of a subscriber in the operator network.

The AF network element is a function network element that provides various business services and that can interact with the core network through another network element and interact with a policy management framework to perform policy management.

In addition, although not shown, the CN may further include another possible network element, for example, a network exposure function (network exposure function, NEF) network element or a unified data repository (unified data repository, UDR) network element.

In embodiments of this application, an apparatus configured to implement a function of the core network device may be a core network device, or may be an apparatus that can support the core network device in implementing the function, for example, a chip system, or a combined component or a component that can implement the function of the core network device. The apparatus may be disposed in the core network device. In the technical solutions provided in embodiments of this application, the technical solutions provided in embodiments of this application are described by using an example in which the apparatus configured to implement the function of the core network device is the core network device.

In FIG. 1, Npcf, Nudm, Naf, Namf, Nsmf, N1, N2, N3, N4, and N6 are interface sequence numbers. For meanings of these interface sequence numbers, refer to meanings defined in a related standard protocol. This is not limited herein.

It may be understood that FIG. 1 is shown by using the 5G communication system as an example. The solutions in embodiments of this application may alternatively be applicable to another possible communication system, for example, a future 6th generation (the 6th generation, 6G) communication system. The foregoing network elements or functions may be network elements in a hardware device, or may be software functions run on dedicated hardware, or may be instantiated virtualization functions on a platform (for example, a cloud platform). Optionally, the foregoing network elements or functions may be implemented by one device, may be implemented by a plurality of devices, or may be a functional module in one device. This is not specifically limited in embodiments of this application.

Based on the network architecture shown in FIG. 1, the following first explains and describes related technical features in embodiments of this application. It should be noted that the explanations are intended to facilitate understanding of embodiments of this application, but should not be considered as a limitation on the protection scope claimed in this application.

### 1. Status of a terminal device

The status of the terminal device may include: (1) an RRC connected state, (2) an RRC idle state, and (3) an RRC inactive state. For the RRC connected state, the terminal device establishes an RRC connection to the access network device, to transmit data. For the RRC idle state, the terminal device does not establish an RRC connection to the access network device, and the access network device does not store context information of the terminal device. If the terminal device needs to enter an RRC connected state from the RRC idle state, the terminal device needs to initiate an RRC connection establishment process. For the RRC inactive state, an RRC connection between the terminal device and the access network device is suspended or suspended, but a network connection corresponding to the terminal device still exists in the core network.

The RRC idle state may be referred to as an idle state for short. The RRC inactive state may be referred to as an inactive state for short, or may be referred to as a third state or an inactive state. The RRC connected state may be referred to as a connected state for short.

### 2. PDU session

In the network architecture shown in FIG. 1, data may be transmitted between the terminal device and the DN through a PDU session. A plurality of data flows with different QoS requirements may be transmitted in each PDU session, and are referred to as QoS flows. In a PDU session establishment or modification process, the access network device may configure an air interface resource for a QoS flow in a PDU session, and the core network device may establish, for the PDU session, an N3 tunnel corresponding to the PDU session.

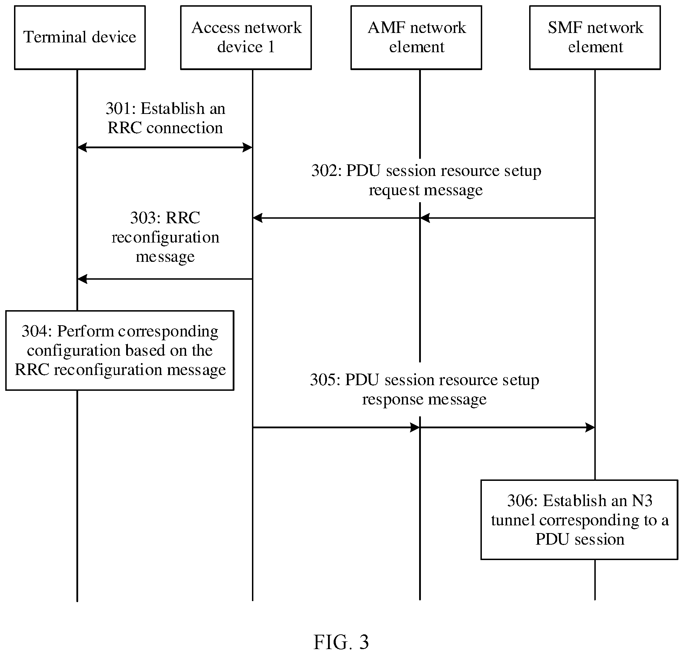

PDU session establishment is used as an example. FIG. 3 is a schematic diagram of a possible PDU session establishment procedure. Refer to FIG. 3. The procedure includes the following steps.

Step 301: A terminal device establishes an RRC connection to an access network device 1, and enters a connected state.

For example, after entering the connected state, the terminal device may trigger a core network device to establish a PDU session for the terminal device, and then may perform the following step 302 to step 306.

Step 302: An SMF network element sends a PDU session resource setup request (PDU session resource setup request) message to the access network device 1 through an AMF network element, to establish the PDU session for the terminal device.

Herein, the PDU session resource setup request message includes an identifier of a to-be-established PDU session (for example, a PDU session 1), identifiers of a plurality of QoS flows (QoS flow indicators, QFIs) of the PDU session, and QoS parameter information of the plurality of QoS flows. The QoS parameter information may include a 5G quality of service identifier (5G QoS identifier, 5QI), or may include other possible information, for example, at least one of the following 5G QoS characteristic information. This is not specifically limited. The 5QI is a scalar, and is used to index corresponding 5G QoS characteristic information. In an example, the 5G QoS characteristic information may include a priority level (priority level), a packet delay budget (packet delay budget, PDB), and a packet error rate (packet error rate, PER).

Step 303: The access network device 1 receives the PDU session resource setup request message, and sends an RRC reconfiguration message to the terminal device, where the RRC reconfiguration message may include air interface resource configuration information respectively corresponding to the plurality of QoS flows in the PDU session 1.

Herein, a QoS flow 1 in the PDU session 1 is used as an example. The access network device 1 may determine, based on QoS parameter information of the QoS flow 1, air interface resource configuration information corresponding to the QoS flow 1. The air interface resource configuration information corresponding to the QoS flow 1 may include at least one of DRB configuration information, PDCP configuration information, RLC configuration information, and logical channel configuration information corresponding to the QoS flow 1. In an example, the PDCP configuration information may include a PDCP sequence number (sequence number, SN) length; the RLC configuration information may include an RLC SN length and an RLC mode; and the logical channel configuration information may include a logical channel identifier.

Step 304: The terminal device receives the RRC reconfiguration message, and performs corresponding configuration based on the RRC reconfiguration message.

Step 305: The access network device 1 sends a PDU session resource setup response message to the SMF network element through the AMF network element.

Step 306: The SMF network element may establish an N3 tunnel corresponding to the PDU session (for example, the PDU session 1).

For example, the SMF network element may allocate, to a UPF network element, an N3 tunnel address (referred to as a first N3 tunnel address for ease of description) on the side of the UPF network element, and then send the first N3 tunnel address to the access network device 1 through the AMF network element. Correspondingly, after receiving the first N3 tunnel address, the access network device 1 may allocate an N3 tunnel address (referred to as a second N3 tunnel address) on the side of the access network device 1, and send the second N3 tunnel address to the SMF network element through the AMF network element. Then, the SMF network element sends the second N3 tunnel address to the UPF network element. In addition, the SMF network element may further send, to the UPF network element, the first N3 tunnel address allocated to the UPF network element. In this way, the N3 tunnel is established between the access network device 1 and the UPF network element, and data of the PDU session 1 can be subsequently transmitted through the N3 tunnel. An N3 tunnel address may be an N3 tunnel number.

### 3. State transition of a terminal device

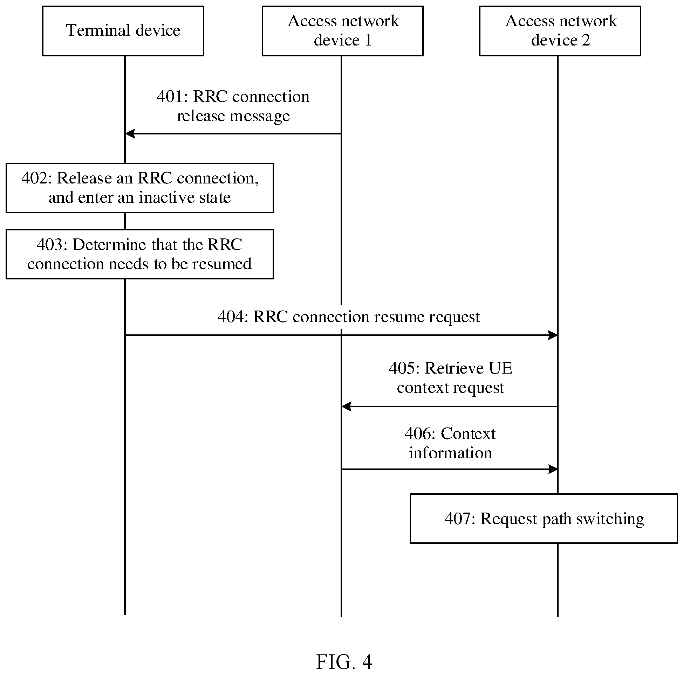

FIG. 4 is a possible schematic flowchart in which a terminal device enters an inactive state from a connected state. As shown in FIG. 4, the procedure may include the following steps.

Step 401: An access network device 1 sends an RRC connection release (RRC connection release) message to a terminal device that is in a connected state, where the RRC connection release message notifies the terminal device to suspend an RRC connection and enter an inactive state.

For example, there may be a plurality of cases in which the access network device 1 sends the RRC connection release message to the terminal device that is in the connected state. For example, if the access network device 1 does not receive data of the terminal device within a specified time period, the access network device 1 may send the RRC connection release message to the terminal device, to configure the terminal device to enter the inactive state. The "configuring the terminal device to enter the inactive state" may also be described as "suspending the RRC connection of the terminal device".

Step 402: The terminal device receives the RRC connection release message, releases the RRC connection, and enters the inactive state.

For example, the RRC connection release message may carry a release cause (release cause). For example, the release cause may be set to RRC suspend (RRC suspend) or RRC inactive (RRC inactive). In this way, when receiving the RRC connection release message and determining that the release cause is RRC suspend or RRC inactive, the terminal device may suspend the RRC connection and enter the inactive state. The release cause may also be understood as indication information that indicates the terminal device to enter the inactive state or an idle state.

The RRC connection release message may further carry a resume identifier (resume ID), and the resume identifier may include information such as an identifier of the terminal. The identifier of the terminal device may be an inactive radio network temporary identifier (inactive radio network temporary identifier, I-RNTI).

Step 403: The terminal device determines, in the inactive state, that the RRC connection needs to be resumed.

Herein, there may be a plurality of cases in which the terminal device determines that the RRC connection needs to be resumed. For example, the terminal device determines, in the inactive state, that uplink data needs to be transmitted. Alternatively, the terminal device receives a paging message in the inactive state. Alternatively, there is another possible case. This is not specifically limited.

Step 404: The terminal device sends an RRC connection resume request (RRC connection resume request) to an access network device 2. Correspondingly, the access network device 2 receives the RRC connection resume request from the terminal device.

For example, the RRC connection resume request may include a resume identifier, and may further include a resume cause (resume cause).

For example, the terminal device may further send the uplink data to the access network device 2.

Step 405: After receiving the RRC connection resume request, the access network device 2 sends a retrieve UE context request (retrieve UE context request) to the access network device 1, where the retrieve UE context request requests to obtain context information of the terminal device. Correspondingly, the access network device 1 receives the retrieve UE context request from the access network device 2.

Herein, the access network device 2 may determine, based on the resume identifier, an access network device (for example, the access network device 1) in which the context information of the terminal device is located, and then send the retrieve UE context request to the access network device 1, where the retrieve UE context request may include the resume identifier.

Step 406: The access network device 1 sends a retrieve UE context response (retrieve UE context response) to the access network device 2, where the retrieve UE context response includes the context information of the terminal device.

For example, the context information of the terminal device may include an access stratum (access stratum, AS) context of the terminal device, for example, at least one of a cell identity of a source primary cell, a physical cell identifier of the source primary cell, a cell radio network temporary identifier (cell radio network temporary identifier, C-RNTI) of the source primary cell, and a robust header compression (robust header compression, ROHC) state. The source primary cell may be a cell that is of the access network device 1 and that is accessed by the terminal device before the terminal device enters the inactive state.

Optionally, the context information of the terminal device may further include key information, for example, at least one of an access stratum key, an RRC integrity protection key, a next hop (next hop, NH) key, and a next hop chaining counter (next hop chaining counter, NCC).

Optionally, the context information of the terminal device may further include an identifier of a PDU session of the terminal device, an identifier of a QoS flow in the PDU session, and air interface resource configuration information corresponding to the QoS flow, and may further include QoS parameter information corresponding to the QoS flow. In this way, after receiving the context information of the terminal device, the access network device 2 may obtain a correspondence between the PDU session of the terminal device and a logical channel based on the air interface resource configuration information corresponding to the QoS flow in the PDU session. For example, a PDU session 1 includes a QoS flow 1 and a QoS flow 2. The QoS flow 1 corresponds to a DRB 1, and the DRB 1 corresponds to a logical channel 1. The QoS flow 2 corresponds to a DRB 2, and the DRB 2 corresponds to a logical channel 2. In this way, it may be determined that the PDU session 1 corresponds to the logical channel 1 and the logical channel 2.

Step 407: The access network device 2 requests path switching (path switch).

Herein, path switching is to change a path (namely, an N3 tunnel corresponding to the PDU session) of user plane data of the terminal device. For example, the path of the user plane data is switched from UPF network element-access network device 1 to UPF network element-access network device 2.

It should be noted that the access network device 1 and the access network device 2 may be different access network devices. For example, the access network device 2 may be a neighboring access network device of the access network device 1. In this case, the access network device 1 may be referred to as a last serving (last serving) access network device, a source (source) access network device, or an old node (old node), and the access network device 2 may be referred to as a target access network device or a new node (new node). In another possible example, the access network device 1 and the access network device 2 may alternatively be a same access network device. In this case, an operation of interaction between the access network device 1 and the access network device 2 may be omitted.

Based on descriptions of the foregoing related technical features, in this embodiment of this application, a related implementation in which a core network device performs admission control on PDU sessions of a terminal device when the terminal device in an inactive state needs to transmit data is studied.

Refer to the procedure shown in FIG. 4. When the terminal device needs to transmit data, and the access network device 1 is different from the access network device 2, the core network device needs to switch between N3 tunnels corresponding to PDU sessions of the terminal device. In this case, if determining that user plane resources and/or control plane resources are limited, the core network device may release a part or all of the PDU sessions of the terminal device. For example, the access network device 1 and the access network device 2 correspond to different AMF network elements (where the access network device 1 corresponds to an AMF network element 1, and the access network device 2 corresponds to an AMF network element 2). When the access network device 2 requests path switching, the core network device may release the part or all of the PDU sessions of the terminal device due to limited control plane resources of the AMF network element 2. For another example, the access network device 1 and the access network device 2 correspond to different UPF network elements (where the access network device 1 corresponds to an UPF network element 1, and the access network device 2 corresponds to an UPF network element 2). When the access network device 2 requests path switching, the core network device may release the part or all of the PDU sessions of the terminal device due to limited user plane resources of the UPF network element 2. The core network device may be an AMF network element or an SMF network element.

For example, the PDU sessions of the terminal device include a PDU session 1, a PDU session 2, and a PDU session 3, and the terminal device in the inactive state needs to transmit uplink data through the PDU session 3. When the access network device 2 requests path switching, if the core network device admits the PDU session 1 and the PDU session 2, and releases the PDU session 3, the terminal device cannot transmit the uplink data through the PDU session 3. Consequently, uplink data transmission is affected.

Based on this, embodiments of this application provide a communication method, to improve appropriateness of performing admission control on PDU sessions by a core network device.

In a possible implementation, the communication method provided in embodiments of this application may include: A first access network device sends a request message to the core network device, where the request message requests path switching of user plane data of the terminal device, and the request message may include assistance information. Then, the core network device may perform admission control on PDU sessions of the terminal device based on the assistance information. This can improve appropriateness of performing admission control on the PDU sessions by the core network device.

In an example, the assistance information may include at least one of the following: (1) first information, where the first information indicates a first PDU session corresponding to first uplink data, and the first uplink data is uplink data received by the first access network device from the terminal device; (2) a QFI corresponding to the first uplink data; (3) QoS parameter information corresponding to the first uplink data; (4) a data amount of the first uplink data; (5) a remaining uplink data amount of the first PDU session; (6) second information, where the second information indicates a second PDU session corresponding to uplink data that is expected to arrive; (7) a QFI corresponding to the uplink data that is expected to arrive; (8) QoS parameter information corresponding to the uplink data that is expected to arrive; (9) a remaining uplink data amount of a third PDU session; (10) third information, where the third information indicates an RRC state of the terminal device; and (11) fourth information, where the fourth information indicates a fourth PDU session.

Herein, the first PDU session, the second PDU session, the third PDU session, and the fourth PDU session are explained and described. The first PDU session is a PDU session through which uplink data currently arrives at the terminal device, where the terminal device sends, to the first access network device, a part or all of the arrived uplink data. The second PDU session is a PDU session through which uplink data does not currently arrive at the terminal device but is expected to arrive at the terminal device. The third PDU session is a PDU session through which uplink data currently arrives at the terminal device, where the terminal device has not sent the arrived uplink data to the first access network device. The fourth PDU session is a PDU session through which uplink data neither currently arrives at the terminal device nor is expected to arrive.

For example, the PDU sessions of the terminal device may include at least one of the first PDU session, the second PDU session, the third PDU session, and the fourth PDU session.

It may be understood that the foregoing describes a possible example of the assistance information. Alternatively, during specific implementation, transformation processing may be performed based on the foregoing example according to an actual requirement. For example, in the foregoing example, the PDU sessions of the terminal device are classified into the first PDU session, the second PDU session, the third PDU session, and the fourth PDU session. In another possible example, the PDU sessions of the terminal device may alternatively be classified into a PDU session through which uplink data arrives at the terminal device, and a PDU session through which no uplink data arrives at the terminal device. In this case, the assistance information may include indication information a and/or indication information b. The indication information a indicates a PDU session corresponding to uplink data that arrives at the terminal device (namely, the PDU session through which uplink data arrives at the terminal device, for example, the first PDU session and the third PDU session). The indication information b indicates the PDU session through which no uplink data arrives at the terminal device (for example, the second PDU session and the fourth PDU session). Alternatively, the PDU sessions of the terminal device may be classified into a PDU session through which uplink data arrives at the access network device, and a PDU session through which no uplink data arrives at the access network device. In this case, the assistance information may include indication information c and/or indication information d. The indication information c indicates the PDU session through which uplink data arrives at the access network device. The indication information d indicates the PDU session through which no uplink data arrives at the access network device.

It should be noted that: (1) If the first access network device does not receive the first uplink data from the terminal device before sending the request message to the core network device (that is, the PDU sessions of the terminal device do not include the first PDU session), the assistance information may not include (1) to (5). If the PDU sessions of the terminal device do not include the second PDU session, the assistance information may not include (6) to (8). If the PDU sessions of the terminal device do not include the third PDU session, the assistance information may not include (9). If the PDU sessions of the terminal device do not include the fourth PDU session, the assistance information may not include (11).

In addition, for assistance information corresponding to each PDU session, the assistance information may include one, more, or all of the foregoing information. For example, for the first PDU, the assistance information may include at least one of (1) to (5). For another example, for the second PDU, the assistance information includes at least one of (6) to (8). Correspondingly, the core network device determines an admitted PDU session or a rejected PDU session according to a rule corresponding to content included in the assistance information. Details are described below.

(2) There may be a plurality of cases in which the first access network device is triggered to send the request message to the core network device. For example, when the terminal device in an inactive state needs to transmit data, the first access network device may send the request message to the core network device. In this case, the RRC state of the terminal device indicated by the third information may be the inactive state. For another example, when the terminal device needs to be handed over from another access network device to the first access network device, the first access network device sends the request message to the core network device. In this case, the RRC state of the terminal device indicated by the third information may be a connected state.

For example, when the RRC state of the terminal device indicated by the third information may be the inactive state, the core network device may reject or release a part or all of the PDU sessions of the terminal device. When the RRC state of the terminal device indicated by the third information may be the connected state, the core network device needs to admit all the PDU sessions of the terminal device as much as possible, to reduce impact on data transmission of the terminal device. In an example, if the assistance information includes the third information, and the RRC state of the terminal device indicated by the third information may be the connected state, the assistance information may no longer include (1) to (9) and (11).

The following describes in detail the communication method provided in embodiments of this application by using a scenario in which a terminal device in an inactive state needs to transmit data as an example.

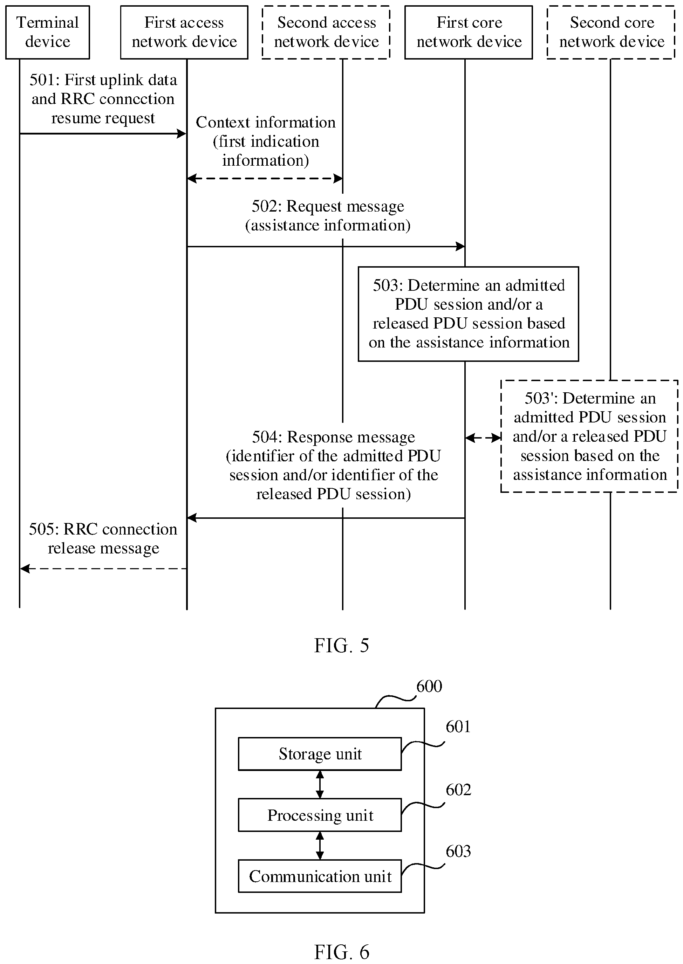

FIG. 5 is a schematic flowchart corresponding to a communication method according to an embodiment of this application. In FIG. 5, a first access network device may be a target access network device of a terminal device, a second access network device may be a last serving access network device of the terminal device, a first core network device may be an AMF network element, and a second core network device may be an SMF network element.

As shown in FIG. 5, the method may include the following steps.

Step 501: The terminal device sends first uplink data to the first access network device. Correspondingly, the first access network device receives the first uplink data.

Herein, because the terminal device stores context information of the terminal device when the terminal device is in an inactive state, the terminal device may send the first uplink data based on the stored context information.

In this embodiment of this application, the terminal device may further send an RRC connection resume request to the first access network device. The RRC connection resume request and the first uplink data may be carried in a same message. For example, the message may be a message 3 in a four-step random access process or a message A in a two-step random access process. Alternatively, the first uplink data may be carried in the RRC connection resume request. Alternatively, the RRC connection resume request and the first uplink data may be carried in different messages. This is not specifically limited.

In an example, the terminal device may further send, to the first access network device, at least one of a QFI corresponding to the first uplink data, QoS parameter information corresponding to the first uplink data, a data amount of the first uplink data, a remaining uplink data amount of a first PDU session, second information (indicating a second PDU session corresponding to uplink data that is expected to arrive), a QFI corresponding to the uplink data that is expected to arrive, QoS parameter information corresponding to the uplink data that is expected to arrive, a remaining uplink data amount of a third PDU session, and fourth information (indicating a fourth PDU session).

The terminal device may send the remaining uplink data amount of the first PDU session to the first access network device in a plurality of manners. For example, the terminal device may send a buffer status report to the first access network device, where the buffer status report indicates the remaining uplink data amount of the first PDU session. In an example, the buffer status report may include identifiers of one or more logical channel groups corresponding to the first PDU session, and a remaining uplink data amount of each logical channel group. Further, after receiving the buffer status report, the first access network device may obtain the remaining uplink data amount of the first PDU session based on a sum of remaining uplink data amounts of the one or more logical channel groups corresponding to the first PDU session. For example, for a manner in which the terminal device sends the remaining uplink data amount of the third PDU session to the first access network device, refer to the foregoing descriptions for processing.

It should be noted that the remaining uplink data amount of the first PDU session and the remaining uplink data amount of the third PDU session may be indicated in one buffer status report, or may be indicated in different buffer status reports. This is not specifically limited.

The terminal device may determine, in a plurality of manners, the second PDU session corresponding to the uplink data that is expected to arrive. For example, the terminal device may store historical data transmission information of one or more PDU sessions of the terminal device. If the terminal device predicts, based on the historical data transmission information of the one or more PDU sessions, that uplink data is to arrive through the second PDU session in the one or more PDU sessions, the terminal device may determine the second information. Further, the terminal device may determine the QFI corresponding to the uplink data that is expected to arrive and the QoS parameter information corresponding to the uplink data that is expected to arrive. The historical data transmission information of each PDU session may include information such as an amount of data transmitted through each PDU session in a specified time period. This is not specifically limited. In addition, a specific manner in which the terminal device performs prediction based on the historical data transmission information of the one or more PDU sessions may depend on internal implementation of the terminal device. This is not limited in this embodiment of this application.

It should be noted that, in another possible example, the terminal device may further send at least one of indication information a, indication information b, indication information c, and indication information d to the first access network device.

Step 502: The first access network device sends a request message to the first core network device, where the request message requests path switching of user plane data of the terminal device, and the request message may include assistance information. Correspondingly, the first core network device may receive the request message. The request message may be a path switch request (path switch request) message.

Herein, an example in which the assistance information includes at least one of (1) to (11) is used. The following describes some possible implementations in which the first access network device obtains (1) to (11).
(1) For first information, after receiving the first uplink data, the first access network device may determine the first PDU session corresponding to the first uplink data, to obtain the first information. The first access network device may determine, in a plurality of manners, the first PDU session corresponding to the first uplink data. For example, in a possible implementation, the first access network device may determine a logical channel (for example, a first logical channel) corresponding to the first uplink data, and obtain first indication information from the second access network device. The first indication information indicates that the first logical channel corresponds to the first PDU session, or the first indication information indicates a correspondence between the first logical channel and the first PDU session. In this way, the first access network device can determine the first PDU session corresponding to the first uplink data.

In the foregoing manner, the first access network device may determine, in a plurality of manners, the logical channel corresponding to the first uplink data. For example, the first access network device may receive, from the terminal device, a logical channel identifier corresponding to the first uplink data, and then determine, based on the logical channel identifier corresponding to the first uplink data, the logical channel corresponding to the first uplink data.

In the foregoing manner, the first access network device may obtain the first indication information from the second access network device in a plurality of manners. For example, the first access network device may send a retrieve UE context request message to the second access network device, and receive the context information sent by the second access network device, where the context information includes the first indication information.

In an example, that the first indication information indicates that the first logical channel corresponds to the first PDU session may mean that the first indication information includes an identifier of the first logical channel corresponding to the first PDU session or an identifier of the first PDU session corresponding to the first logical channel. For example, the second access network device may send the first indication information to the first access network device by using an XnAP message. In this case, the first access network device may directly determine, based on the first indication information, that the first PDU session corresponds to the first logical channel. In another example, that the first indication information indicates a correspondence between the first logical channel and the first PDU session may mean that the first indication information includes a correspondence between an identifier of the first PDU session and an identifier of the first logical channel. In this case, the first access network device may determine, based on the first indication information, that the first PDU session corresponds to the first logical channel. For example, the first indication information may include an identifier of a PDU session corresponding to a DRB (for example, the identifier of the first PDU session) and a logical channel identifier (for example, the identifier of the first logical channel) associated with the DRB. In this case, this may be understood as that the second access network device encapsulates an RRC reconfiguration message (including the identifier of the PDU session corresponding to the DRB and the logical channel identifier associated with the DRB), and sends the RRC reconfiguration message to the first access network device through an Xn interface.

It should be noted that the first information may indicate, in a plurality of manners, the first PDU session corresponding to the first uplink data. In an example, the first information may include the identifier of the first PDU session. In another example, the first information includes identifiers of the plurality of PDU sessions of the terminal device and indication information corresponding to each PDU session. The indication information corresponding to each PDU session indicates whether the first access network device receives uplink data of the PDU session. For example, the indication information corresponding to each PDU session may include one bit. If a value of the bit is 1, it indicates that the first access network device receives the uplink data of the PDU session; or if a value of the bit is 0, it indicates that the first access network device does not receive the uplink data of the PDU session.

(2) For the QFI corresponding to the first uplink data, as described above, the terminal device may send, to the first access network device, the QFI corresponding to the first uplink data, and then the first access network device may obtain the QFI corresponding to the first uplink data.

(3) For the QoS parameter information corresponding to the first uplink data, as described above, the terminal device may send, to the first access network device, the QoS parameter information corresponding to the first uplink data, and then the first access network device may obtain the QoS parameter information corresponding to the first uplink data. Alternatively, the terminal device may not send, to the first access network device, the QoS parameter information corresponding to the first uplink data. In this case, the first access network device may obtain, based on the QFI or the logical channel identifier corresponding to the first uplink data and the context information obtained from the second access network device, the QoS parameter information corresponding to the first uplink data.

(4) For the data amount of the first uplink data, as described above, the terminal device may send the data amount of the first uplink data to the first access network device, and then the first access network device may obtain the data amount of the first uplink data. Alternatively, the terminal device may not send the data amount of the first uplink data to the first access network device. In this case, after receiving the first uplink data, the first access network device may determine the data amount of the first uplink data.

(5) For the remaining uplink data amount of the first PDU session and the remaining uplink data amount of the third PDU session, as described above, the terminal device may send the buffer status report to the first access network device, and then the first access network device may obtain the remaining uplink data amount of the first PDU session and the remaining uplink data amount of the third PDU session based on the buffer status report.

(6) For the second information, the QFI corresponding to the uplink data that is expected to arrive, and the QoS parameter information corresponding to the uplink data that is expected to arrive, as described above, the terminal device may send, to the first access network device, the second information, the QFI corresponding to the uplink data that is expected to arrive, and the QoS parameter information corresponding to the uplink data that is expected to arrive, and then the first access network device may obtain the second information, the QFI corresponding to the uplink data that is expected to arrive, and the QoS parameter information corresponding to the uplink data that is expected to arrive. Alternatively, the terminal device may not send, to the first access network device, the second information, the QFI corresponding to the uplink data that is expected to arrive, and the QoS parameter information corresponding to the uplink data that is expected to arrive. In this case, the first access network device may obtain the historical data transmission information of the one or more PDU sessions of the terminal device from the second access network device. If the terminal device predicts, based on the historical data transmission information of the one or more PDU sessions, that uplink data is to arrive through the second PDU session in the one or more PDU sessions, the terminal device may determine the second information. Further, the terminal device may determine the QFI corresponding to the uplink data that is expected to arrive and the QoS parameter information corresponding to the uplink data that is expected to arrive.

It should be noted that, for a manner in which the second information indicates the second PDU session corresponding to the uplink data that is expected to arrive, refer to descriptions about the first information. For example, the second information may include an identifier of the second PDU session. Alternatively, the second information may include identifiers of the plurality of PDU sessions of the terminal device and indication information corresponding to each PDU session. The indication information corresponding to each PDU session indicates whether the uplink data that is expected to arrive through the PDU session.

(7) For the fourth information, as described above, the terminal device may send the fourth information to the first access network device, and then the first access network device may obtain the fourth information. Alternatively, the terminal device may not send the fourth information to the first access network device. Then, the first access network device may determine the first PDU session, the second PDU session, and the third PDU session based on other information (for example, the first information, the second information, and the remaining data amount of the third PDU session) sent by the terminal device, and then determine that a PDU session other than the first PDU session, the second PDU session, and the third PDU session in the PDU sessions of the terminal device is the fourth PDU session, to obtain the fourth information. The fourth information may indicate the fourth PDU session in a plurality of manners. For example, for the manners, adaptively refer to descriptions of the first information and the second information.

It should be noted that the foregoing uses an example in which the assistance information includes at least one of (1) to (11). In another possible example, the assistance information includes the indication information a and/or the indication information b. In this case, the terminal device may send the indication information a and/or the indication information b to the first access network device, and then the first access network device may obtain the indication information a and/or the indication information b. Alternatively, the terminal device may not send the indication information a and/or the indication information b to the first access network device. In this case, the first access network device may determine the indication information a and/or the indication information b based on other possible information (for example, the first information and the second information) sent by the terminal device. The assistance information includes the indication information c and/or the indication information d. In this case, the terminal device may send the indication information c and/or the indication information d to the first access network device, and then the first access network device may obtain the indication information c and/or the indication information d. Alternatively, the terminal device may not send the indication information c and/or the indication information d to the first access network device. In this case, the first access network device may determine the indication information c and/or the indication information d based on other possible information (for example, the first information) sent by the terminal device.

For example, for the indication information a, the indication information b, the indication information c, and the indication information d, the indication information a is used as an example. For a manner in which the indication information a indicates a PDU session through which uplink data arrives at the terminal device, adaptively refer to descriptions about the first information.

Step 503: The first core network device determines an admitted PDU session and/or a released PDU session based on the assistance information. The released PDU session may also be described as a rejected PDU session.

In an example, when performing admission control on the PDU sessions of the terminal device based on the assistance information, the first core network device may preferentially admit a high-priority PDU session based on priorities of the PDU sessions. In another example, when performing admission control on the PDU sessions of the terminal device based on the assistance information, the first core network device may preferentially release a lowpriority PDU session based on priorities of the PDU sessions.

For example, a priority rule of the PDU sessions may include at least one of the following:
① A priority of a PDU session through which uplink data arrives at the terminal device is higher than a priority of a PDU session through which no uplink data arrives at the terminal device.
② A priority of a PDU session through which uplink data arrives at the access network device is higher than a priority of a PDU session through which no uplink data arrives at the access network device.
③ A priority of the first PDU session is higher than a priority of the second PDU session, a priority of the third PDU session, or a priority of the fourth PDU session. For meanings of the first PDU session, the second PDU session, the third PDU session, and the fourth PDU session, refer to the foregoing descriptions.
④ A priority of the third PDU session is higher than a priority of the second PDU session or a priority of the fourth PDU session.
⑤ A priority of the second PDU session is higher than a priority of the fourth PDU session.
⑥ For a plurality of first PDU sessions, for example, when both a PDU session 1 and a PDU session 2 are first PDU sessions, uplink data 1 received by the first access network device corresponds to the PDU session 1, and uplink data 2 received by the first access network device corresponds to the PDU session 2, the first core network device may determine delay urgency (or packet loss rate requirements) of the uplink data 1 and the uplink data 2 based on QFIs and/or QoS parameter information of the uplink data 1 and the uplink data 2. If the delay urgency of the uplink data 1 is greater than the delay urgency of the uplink data 2, a priority of the PDU session 1 is higher than a priority of the PDU session 2. Alternatively, if a data amount of the uplink data 1 is greater than a data amount of the uplink data 2, a priority of the PDU session 1 is higher than a priority of the PDU session 2. Alternatively, if a remaining uplink data amount of the PDU session 1 is greater than a remaining uplink data amount of the PDU session 2, a priority of the PDU session 1 is higher than a priority of the PDU session 2.
⑦ For a plurality of second PDU sessions, for example, when both a PDU session 1 and a PDU session 2 are second PDU sessions, uplink data 1 that is expected to arrive corresponds to the PDU session 1, and uplink data 2 that is expected to arrive corresponds to the PDU session 2, the first core network device may determine delay urgency (or packet loss rate requirements) of the uplink data 1 and the uplink data 2 based on QFIs and/or QoS parameter information of the uplink data 1 and the uplink data 2. If the delay urgency of the uplink data 1 is greater than the delay urgency of the uplink data 2, a priority of the PDU session 1 is higher than a priority of the PDU session 2.
⑧ For a plurality of third PDU sessions, for example, when both a PDU session 1 and a PDU session 2 are third PDU sessions, uplink data 1 that has arrived at the terminal device corresponds to the PDU session 1, and uplink data 2 that has arrived at the terminal device corresponds to the PDU session 2, if a remaining uplink data amount of the PDU session 1 (namely, a data amount of the uplink data 1) is greater than a remaining uplink data amount of the PDU session 2 (namely, a data amount of the uplink data 2), a priority of the PDU session 1 is greater than a priority of the PDU session 2.
⑨ A plurality of fourth PDU sessions may have a same priority.

It should be noted that, for example, a priority rule of the plurality of first PDU sessions is applicable to a plurality of first PDU sessions of a same terminal device or a plurality of first PDU sessions of different terminal devices. In other words, the PDU session 1 and the PDU session 2 may be PDU sessions of a same terminal device or PDU sessions of different terminal devices. For a priority rule of the plurality of second PDU sessions and a priority rule of the plurality of third PDU sessions, adaptively refer to the foregoing descriptions for processing.

According to the priority rule described above, the following provides several examples to describe admission control performed by the first core network device on the PDU sessions.

For example, the terminal device includes a PDU session 1 and a PDU session 2. The PDU session 1 is a first PDU session, and the PDU session 2 is a second PDU session. If the first core network device determines that only one PDU session of the terminal device can be admitted, the first core network device may admit the PDU session 1, and reject or release the PDU session 2.

For another example, the terminal device includes a PDU session 1 and a PDU session 2. Both the PDU session 1 and the PDU session 2 are first PDU sessions, and a remaining uplink data amount of the PDU session 1 is greater than a remaining uplink data amount of the PDU session 2. If the first core network device determines that only one PDU session of the terminal device can be admitted, the first core network device may admit the PDU session 1, and reject or release the PDU session 2.

For another example, the terminal device includes a PDU session 1, a PDU session 2, and a PDU session 3. The PDU session 1 is a first PDU session, the PDU session 2 is a second PDU session, and the PDU session 3 is a third PDU session. If the first core network device determines that only two PDU sessions of the terminal device can be admitted, the first core network device may admit the PDU session 1 and the PDU session 2, and reject or release the PDU session 3.

For another example, the terminal device includes a PDU session 1 and a PDU session 2. The PDU session 1 is a second PDU session, and the PDU session 2 is a third PDU session. If the first core network device determines that the PDU sessions of the terminal device cannot be admitted, the first core network device may reject or release the PDU session 1 and the PDU session 2. There may be a plurality of cases in which the first core network device determines that the PDU sessions of the terminal device cannot be admitted. For example, the first core network device further needs to admit PDU sessions of another terminal device, and priorities of the PDU sessions of the another terminal device are higher than priorities of the PDU sessions of the terminal device.

It should be noted that step 503 may alternatively be replaced with step 503': The first core network device sends the assistance information to the second core network device based on the request message, and then the second core network device may determine an admitted PDU session and/or a released PDU session based on the assistance information, and send second indication information to the first core network device. The second indication information indicates the admitted PDU session and/or the released PDU session. The priority rule may also be used by the second core network device to determine the admitted PDU session and/or the released PDU session based on the assistance information. Details are not described again.

In an example, the second indication information may include an identifier of the admitted PDU session and/or an identifier of the released PDU session.

Step 504: The first core network device sends a response message of the request message to the first access network device, where the response message includes the identifier of the admitted PDU session and/or the identifier of the released PDU session. Correspondingly, the first access network device may receive the response message. The response message may be a path switch request acknowledgment (path switch request ACK) message.

In an example, the admitted PDU session may include at least one of the first PDU session, the second PDU session, and the third PDU session. In another example, the released PDU session may include at least one of the first PDU session, the second PDU session, and the third PDU session.

It may be understood that if the first core network device (or the second core network device) admits all the PDU sessions of the terminal device, the response message includes identifiers of the admitted PDU sessions, and no longer includes an identifier of a rejected PDU session; or the response message does not include identifiers of the PDU sessions, and all the PDU sessions are admitted by default. If the first core network device (or the second core network device) admits a part of the PDU sessions of the terminal device, the response message may include an identifier of an admitted PDU session and/or an identifier of a released PDU session. For example, the response message may include only the identifier of the admitted PDU session, and a PDU session that is not included is not admitted by default. Alternatively, the response message may include only the identifier of the released PDU session, and a PDU session that is not included is admitted by default. If the first core network device (or the second core network device) rejects all the PDU sessions of the terminal device, the response message includes identifiers of the rejected PDU sessions, and no longer includes an identifier of an admitted PDU session; or the response message does not include identifiers of the PDU sessions, and all the PDU sessions are rejected by default.

For example, after receiving the response message, the first access network device may send the uplink data of the terminal device to a UPF network element through an N3 tunnel corresponding to the admitted PDU session.

Step 505: The first access network device sends an RRC connection release message to the terminal device.

Refer to descriptions in step 501. If the terminal device sends an RRC connection resume request to the first access network device, herein, the first access network device may send the RRC connection release message to the terminal device. The RRC connection release message notifies the terminal device to continue to be in the inactive state or enter an idle state. Specifically, indication information included in the RRC connection release message may indicate the terminal device to enter the inactive state or the idle state. The RRC connection release message may further include at least either of a resume identifier and an NCC. For example, if determining that an uplink data amount of the terminal device is small and an RRC connection does not need to be resumed, the first access network device may send the RRC connection release message to the terminal device. Alternatively, if determining that the terminal device sends the uplink data by using a preset resource, the first access network device may send the RRC connection release message to the terminal device. The preset resource herein may be a preconfigured grant (configured grant) resource.

It should be noted that, in another possible example, the first access network device may alternatively send an RRC connection resume message to the terminal device, to indicate the terminal device to enter a connected state.

According to the foregoing method, because the request message sent by the first access network device to the first core network device may include the assistance information, the first core network device may perform admission control on the PDU sessions with reference to the assistance information. This can effectively improve appropriateness of performing admission control on the PDU sessions by the first core network device.

It should be noted that the procedure described in step 501 to step 505 shows only some possible steps. During specific implementation, another possible step may be further included. For example, the first access network device may send a context release (UE context release) message of the terminal device to the second access network device, to indicate the second access network device to release context information of the terminal device.

In addition, step numbers in the flowcharts described in embodiments of this application are merely an example of an execution procedure, and do not constitute any limitation on an execution sequence of the steps. In embodiments of this application, there is no strict execution sequence between steps that do not have a time sequence dependency relationship with each other. In addition, not all steps shown in the flowcharts are mandatory steps, and some steps may be added or deleted based on the flowcharts according to an actual requirement. For example, all steps shown by dashed lines in FIG. 5 are optional steps.

Some messages in a 5G communication system are used in embodiments of this application. However, during specific implementation, different messages or message names may be used. This is not limited in embodiments of this application.

The foregoing mainly describes the solutions provided in embodiments of this application from the perspective of device interaction. It may be understood that, to implement the foregoing functions, the access network device or the core network device may include a corresponding hardware structure and/or a software module for performing each function. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In embodiments of this application, functional units of the access network device or the core network device may be divided based on the foregoing method examples. For example, each functional unit may be obtained through division based on each corresponding function, or two or more functions may be integrated into one unit. The integrated unit may be implemented in a form of hardware, or may be implemented in a form of a software functional unit.

When the integrated unit is used, FIG. 6 is a possible example block diagram of an apparatus according to an embodiment of this application. As shown in FIG. 6, the apparatus 600 may include a processing unit 602 and a communication unit 603. The processing unit 602 is configured to control and manage an action of the apparatus 600. The communication unit 603 is configured to support the apparatus 600 in communicating with another device. Optionally, the communication unit 603 is also referred to as a transceiver unit, and may include a receiving unit and/or a sending unit, respectively configured to perform a receiving operation and a sending operation. The apparatus 600 may further include a storage unit 601, configured to store program code and/or data of the apparatus 600.

The apparatus 600 may be the first access network device in the foregoing embodiment, or may be a chip disposed in the first access network device. The processing unit 602 may support the apparatus 600 in performing an action of the first access network device in the foregoing method examples. Alternatively, the processing unit 602 mainly performs an internal action of the first access network device in the method examples, and the communication unit 603 may support communication between the apparatus 600 and another device.

Specifically, in an embodiment, the communication unit 603 is configured to: receive first uplink data from a terminal device; and send a request message to a core network device, where the request message requests path switching of user plane data of the terminal device, the request message includes first information, and the first information indicates a first PDU session corresponding to the first uplink data.

In a possible design, the processing unit 602 is configured to determine a logical channel corresponding to the first uplink data. The communication unit 603 is further configured to obtain indication information from a second access network device, where the indication information indicates that the logical channel corresponds to the first protocol data unit PDU session, or the indication information indicates a correspondence between the logical channel and the first PDU session. The processing unit 602 is further configured to determine, based on the logical channel corresponding to the first uplink data and the indication information, the first PDU session corresponding to the first uplink data.

In a possible design, the communication unit 603 is further configured to receive a radio resource control RRC connection resume request from the terminal device, where the first uplink data and the RRC connection resume request are carried in a same message.

In a possible design, the request message further includes at least one of the following: a quality of service QoS flow identifier QFI corresponding to the first uplink data; QoS parameter information corresponding to the first uplink data; a data amount of the first uplink data; a remaining uplink data amount of the first PDU session; second information, where the second information indicates a second PDU session corresponding to uplink data that is expected to arrive; a QFI corresponding to the uplink data that is expected to arrive; QoS parameter information corresponding to the uplink data that is expected to arrive; a remaining uplink data amount of a third PDU session; and third information, where the third information indicates an RRC state of the terminal device.

In a possible design, the communication unit 603 is further configured to: obtain the second information from the terminal device, where the second information is determined by the terminal device based on historical data transmission information of the second PDU session; or obtain historical data transmission information of the second PDU session from the second access network device, and determine the second information based on the historical data transmission information of the second PDU session.

In a possible design, the communication unit 603 is further configured to receive a buffer status report from the terminal device, where the buffer status report indicates the remaining uplink data amount of the first PDU session and/or the remaining uplink data amount of the third PDU session.

In a possible design, the communication unit 603 is further configured to receive a response message of the request message from the core network device, where the response message includes an identifier of an admitted PDU session and/or an identifier of a released PDU session.

In a possible design, the admitted PDU session includes the first PDU session; or the released PDU session includes the first PDU session.

In a possible design, the first information includes an identifier of the first PDU session.

The apparatus 600 may be the first core network device in the foregoing embodiment, or may be a chip disposed in the first core network device. The processing unit 602 may support the apparatus 600 in performing an action of the first core network device in the foregoing method examples. Alternatively, the processing unit 602 mainly performs an internal action of the first core network device in the method examples, and the communication unit 603 may support communication between the apparatus 600 and another device.

Specifically, in an embodiment, the communication unit 603 is configured to receive a request message from an access network device, where the request message requests path switching of user plane data of a terminal device, the request message includes first information, and the first information indicates a first PDU session corresponding to first uplink data. The processing unit 602 is configured to determine an admitted PDU session and/or a rejected PDU session based on the request message.

In a possible design, the request message further includes at least one of the following: a quality of service QoS flow identifier QFI corresponding to the first uplink data; QoS parameter information corresponding to the first uplink data; a data amount of the first uplink data; a remaining uplink data amount of the first PDU session; second information, where the second information indicates a second PDU session corresponding to uplink data that is expected to arrive; a QFI corresponding to the uplink data that is expected to arrive; QoS parameter information corresponding to the uplink data that is expected to arrive; a remaining uplink data amount of a third PDU session; and third information, where the third information indicates an RRC state of the terminal device.

In a possible design, the communication unit 603 is further configured to send a response message of the request message to the access network device, where the response message includes an identifier of the admitted PDU session and/or an identifier of the rejected PDU session.

In a possible design, the admitted PDU session includes the first PDU session; or the released PDU session includes the first PDU session.

In a possible design, the first information includes an identifier of the first PDU session.

In another embodiment, the communication unit 603 is configured to receive a request message from an access network device, where the request message requests path switching of user plane data of a terminal device, the request message includes first information, and the first information indicates a first PDU session corresponding to first uplink data; send the first information to a second core network device based on the request message; and receive an indication message from the second core network device, where the indication message indicates an admitted PDU session and/or a released PDU session.

In a possible design, the communication unit 603 is further configured to send, to the second core network device, at least one of the following: a QoS flow identifier QFI corresponding to the first uplink data; QoS parameter information corresponding to the first uplink data; a data amount of the first uplink data; a remaining uplink data amount of the first PDU session; second information, where the second information indicates a second PDU session corresponding to uplink data that is expected to arrive; a QFI corresponding to the uplink data that is expected to arrive; QoS parameter information corresponding to the uplink data that is expected to arrive; a remaining uplink data amount of a third PDU session; and third information, where the third information indicates an RRC state of the terminal device.

The apparatus 600 may be the second core network device in the foregoing embodiment, or may be a chip disposed in the second core network device. The processing unit 602 may support the apparatus 600 in performing an action of the second core network device in the foregoing method examples. Alternatively, the processing unit 602 mainly performs an internal action of the second core network device in the method examples, and the communication unit 603 may support communication between the apparatus 600 and another device.

Specifically, in an embodiment, the communication unit 603 is configured to: receive first information from a first core network device, where the first information indicates a first PDU session corresponding to first uplink data; and send indication information to the first core network device based on the first information, where the indication information indicates an admitted PDU session and/or a released PDU session.

In a possible design, the communication unit 603 is further configured to receive, from the first core network device, at least one of the following: a quality of service QoS flow identifier QFI corresponding to the first uplink data; QoS parameter information corresponding to the first uplink data; a data amount of the first uplink data; a remaining uplink data amount of the first PDU session; second information, where the second information indicates a second PDU session corresponding to uplink data that is expected to arrive; a QFI corresponding to the uplink data that is expected to arrive; QoS parameter information corresponding to the uplink data that is expected to arrive; a remaining uplink data amount of a third PDU session; and third information, where the third information indicates an RRC state of the terminal device.

It should be understood that division into units in the foregoing apparatuses is merely logical function division. During actual implementation, all or some of the units may be integrated into one physical entity, or may be physically separate. In addition, all the units in the apparatus may be implemented by software invoked by a processing element, or may be implemented by hardware; or some units may be implemented by software invoked by a processing element, and some units may be implemented by hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, some or all of the units may be integrated together, or the units may be implemented independently. The processing element herein may also be referred to as a processor, and may be an integrated circuit having a signal processing capability. In an implementation process, the steps in the foregoing methods or the foregoing units may be implemented by using a hardware integrated logic circuit in the processing element, or may be implemented by software invoked by the processing element.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the unit in the apparatus may be implemented in a form of scheduling a program by a processing element, the processing element may be a processor, for example, a general-purpose central processing unit (central processing unit, CPU), or another processor that can invoke the program. For another example, the units may be integrated and implemented in a form of a system-on-a-chip (system-on-a-chip, SOC).

The foregoing receiving unit is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing sending unit is an interface circuit of the apparatus, and is configured to send a signal to another apparatus. For example, when the apparatus is implemented in a form of a chip, the sending unit is an interface circuit that is of the chip and that is configured to send a signal to another chip or apparatus.

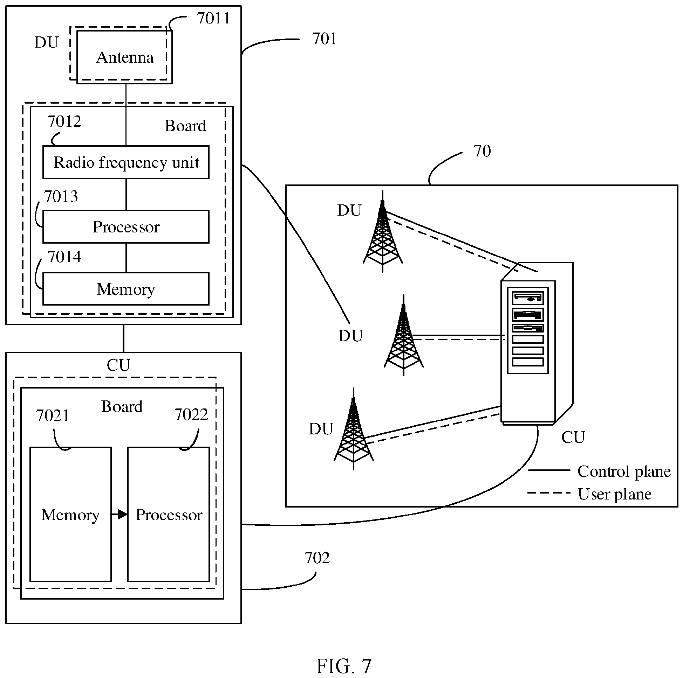

FIG. 7 is a schematic diagram of a structure of an access network device according to an embodiment of this application. The access network device (or a base station) may be used in the system architecture shown in FIG. 1, to perform a function of the access network device in the foregoing method embodiments. The access network device 70 may include one or more DUs 701 and one or more CUs 702. The DU 701 may include at least one antenna 7011, at least one radio frequency unit 7012, at least one processor 7013, and at least one memory 7014. The DU 701 is mainly configured to: receive and send a radio frequency signal, convert a radio frequency signal and a baseband signal, and perform partial baseband processing. The CU 702 may include at least one processor 7022 and at least one memory 7021.

The CU 702 is mainly configured to: perform baseband processing, control the access network device, and the like. The DU 701 and the CU 702 may be physically disposed together, or may be physically disposed separately, in other words, may be a distributed base station. The CU 702 is a control center of the access network device, may also be referred to as a processing unit, and is mainly configured to complete a baseband processing function. For example, the CU 702 may be configured to control the access network device to perform an operation procedure related to the access network device in the foregoing method embodiments.

In addition, optionally, the access network device 70 may include one or more radio frequency units, one or more DUs, and one or more CUs. The DU may include at least one processor 7013 and at least one memory 7014, the radio frequency unit may include at least one antenna 7011 and at least one radio frequency unit 7012, and the CU may include at least one processor 7022 and at least one memory 7021.

In an example, the CU 702 may include one or more boards, and a plurality of boards may jointly support a radio access network (for example, a 5G network) of a single access standard, or may separately support radio access networks (such as an LTE network, a 5G network, or another network) of different access standards. The memory 7021 and the processor 7022 may serve one or more boards. In other words, a memory and a processor may be separately disposed on each board. Alternatively, a plurality of boards may share a same memory and a same processor. In addition, a necessary circuit may be further disposed on each board. The DU 701 may include one or more boards, and a plurality of boards may jointly support a radio access network (for example, a 5G network) of a single access standard, or may separately support radio access networks (such as an LTE network, a 5G network, or another network) of different access standards. The memory 7014 and the processor 7013 may serve one or more boards. In other words, a memory and a processor may be separately disposed on each board. Alternatively, a plurality of boards may share a same memory and a same processor. In addition, a necessary circuit may be further disposed on each board.

The access network device shown in FIG. 7 can implement processes related to the access network device in the method embodiment shown in FIG. 5. Operations and/or functions of the modules in the access network device shown in FIG. 7 are intended to implement the corresponding procedures in the foregoing method embodiment. For details, refer to the descriptions in the foregoing method embodiment. To avoid repetition, detailed descriptions are properly omitted herein.

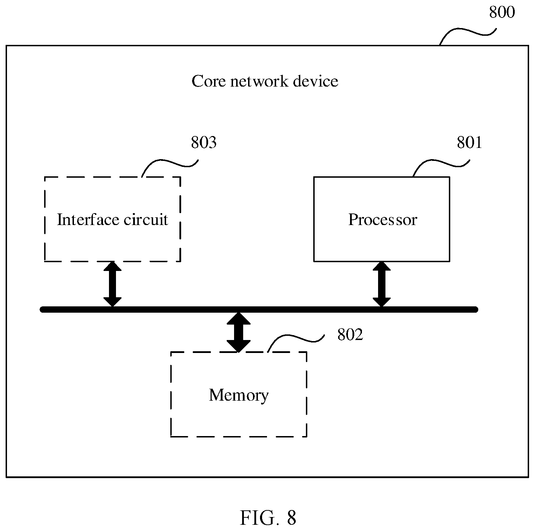

FIG. 8 is a schematic diagram of a structure of a core network device according to an embodiment of this application. The core network device may be the SMF network element or the AMF network element in the foregoing embodiments, and is configured to implement an operation of the SMF network element or the AMF network element in the foregoing embodiments.

As shown in FIG. 8, the core network device 800 may include a processor 801, a memory 802, and an interface circuit 803. The processor 801 may be configured to: process a communication protocol and communication data, and control a communication apparatus. The memory 802 may be configured to store a program and data, and the processor 801 may perform, based on the program, the method performed by the AMF network element or the SMF network element in embodiments of this application. The interface circuit 803 may be used for communication between the core network device 800 and another device. The communication may be wired communication or wireless communication. The interface circuit may be, for example, a service-based communication interface.

Alternatively, the memory 802 may be externally connected to the core network device 800. In this case, the core network device 800 may include the interface circuit 803 and the processor 801. Alternatively, the interface circuit 803 may be externally connected to the core network device 800. In this case, the core network device 800 may include the memory 802 and the processor 801. When both the interface circuit 803 and the memory 802 are externally connected to the core network device 800, the communication apparatus 800 may include the processor 801.

The core network device shown in FIG. 8 can implement processes related to the core network device in the method embodiment shown in FIG. 5. Operations and/or functions of the modules in the core network device shown in FIG. 8 are intended to implement the corresponding procedures in the foregoing method embodiment. For details, refer to the descriptions in the foregoing method embodiment. To avoid repetition, detailed descriptions are properly omitted herein.

In embodiments of this application, the terms "system" and "network" may be used interchangeably. "At least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" usually represents an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not intended to limit an order, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program instructions may alternatively be loaded onto a computer or another programmable data processing device, so that a series of operations and steps are performed on the computer or another programmable device, to generate computer-implemented processing. Therefore, the instructions executed on the computer or the another programmable device provide steps for implementing a specified function in one or more procedures in the flowcharts and/or in one or more blocks in the block diagrams.

It is clear that a person skilled in the art can make various modifications and variations to this application without departing from the spirit and scope of this application. In this way, if these modifications and variations to this application fall within the scope of the claims of this application and their equivalent technologies, this application is also intended to cover these modifications and variations.

## Claims

1. A communication method, comprising:
receiving first uplink data from a terminal device; and
sending a request message to a core network device, wherein the request message requests path switching of user plane data of the terminal device, the request message comprises first information, and the first information indicates a first PDU session corresponding to the first uplink data.

2. The method according to claim 1, wherein the method further comprises:
determining a logical channel corresponding to the first uplink data;
obtaining indication information from a second access network device, wherein the indication information indicates that the logical channel corresponds to the first protocol data unit PDU session, or the indication information indicates a correspondence between the logical channel and the first PDU session; and
determining, based on the logical channel corresponding to the first uplink data and the indication information, the first PDU session corresponding to the first uplink data.

3. The method according to claim 1 or 2, wherein the method further comprises: receiving a radio resource control RRC connection resume request from the terminal device, wherein
the first uplink data and the RRC connection resume request are carried in a same message.

4. The method according to any one of claims 1 to 3, wherein the request message further comprises at least one of the following:
a quality of service QoS flow identifier QFI corresponding to the first uplink data;
QoS parameter information corresponding to the first uplink data;
a data amount of the first uplink data;
a remaining uplink data amount of the first PDU session;
second information, wherein the second information indicates a second PDU session corresponding to uplink data that is expected to arrive;
a QFI corresponding to the uplink data that is expected to arrive;
QoS parameter information corresponding to the uplink data that is expected to arrive;
a remaining uplink data amount of a third PDU session; and
third information, wherein the third information indicates an RRC state of the terminal device.

5. The method according to claim 4, wherein the method further comprises:
obtaining the second information from the terminal device, wherein the second information is determined by the terminal device based on historical data transmission information of the second PDU session; or
obtaining historical data transmission information of the second PDU session from the second access network device, and determining the second information based on the historical data transmission information of the second PDU session.

6. The method according to claim 4 or 5, wherein the method further comprises:
receiving a buffer status report from the terminal device, wherein the buffer status report indicates the remaining uplink data amount of the first PDU session and/or the remaining uplink data amount of the third PDU session.

7. The method according to any one of claims 1 to 6, wherein the method further comprises:
receiving a response message of the request message from the core network device, wherein the response message comprises an identifier of an admitted PDU session and/or an identifier of a released PDU session.

8. The method according to claim 7, wherein the admitted PDU session comprises the first PDU session; or the released PDU session comprises the first PDU session.

9. The method according to any one of claims 1 to 8, wherein the first information comprises an identifier of the first PDU session.

10. A communication method, comprising:
receiving a request message from an access network device, wherein the request message requests path switching of user plane data of a terminal device, the request message comprises first information, and the first information indicates a first PDU session corresponding to first uplink data; and
determining an admitted PDU session and/or a rejected PDU session based on the request message.

11. The method according to claim 10, wherein the request message further comprises at least one of the following:
a QFI corresponding to the first uplink data;
QoS parameter information corresponding to the first uplink data;
a data amount of the first uplink data;
a remaining uplink data amount of the first PDU session;
second information, wherein the second information indicates a second PDU session corresponding to uplink data that is expected to arrive;
a QFI corresponding to the uplink data that is expected to arrive;
QoS parameter information corresponding to the uplink data that is expected to arrive;
a remaining uplink data amount of a third PDU session; and
third information, wherein the third information indicates an RRC state of the terminal device.

12. The method according to claim 10 or 11, wherein the method further comprises:
sending a response message of the request message to the access network device, wherein the response message comprises an identifier of the admitted PDU session and/or an identifier of the rejected PDU session.

13. The method according to claim 12, wherein the admitted PDU session comprises the first PDU session; or the released PDU session comprises the first PDU session.

14. The method according to any one of claims 10 to 13, wherein the first information comprises an identifier of the first PDU session.

15. A communication method, comprising:
receiving a request message from an access network device, wherein the request message requests path switching of user plane data of a terminal device, the request message comprises first information, and the first information indicates a first PDU session corresponding to first uplink data;
sending the first information to a second core network device based on the request message; and
receiving an indication message from the second core network device, wherein the indication message indicates an admitted PDU session and/or a released PDU session.

16. The method according to claim 15, wherein the method further comprises:
sending, to the second core network device, at least one of the following:
a QFI corresponding to the first uplink data;
QoS parameter information corresponding to the first uplink data;
a data amount of the first uplink data;
a remaining uplink data amount of the first PDU session;
second information, wherein the second information indicates a second PDU session corresponding to uplink data that is expected to arrive;
a QFI corresponding to the uplink data that is expected to arrive;
QoS parameter information corresponding to the uplink data that is expected to arrive;
a remaining uplink data amount of a third PDU session; and
third information, wherein the third information indicates an RRC state of the terminal device.

17. A communication method, comprising:
receiving first information from a first core network device, wherein the first information indicates a first PDU session corresponding to first uplink data; and
sending indication information to the first core network device based on the first information, wherein the indication information indicates an admitted PDU session and/or a released PDU session.

18. The method according to claim 17, wherein the method further comprises:
receiving, from the first core network device, at least one of the following:
a QFI corresponding to the first uplink data;
QoS parameter information corresponding to the first uplink data;
a data amount of the first uplink data;
a remaining uplink data amount of the first PDU session;
second information, wherein the second information indicates a second PDU session corresponding to uplink data that is expected to arrive;
a QFI corresponding to the uplink data that is expected to arrive;
QoS parameter information corresponding to the uplink data that is expected to arrive;
a remaining uplink data amount of a third PDU session; and
third information, wherein the third information indicates an RRC state of the terminal device.

19. A communication method, comprising:
obtaining information, wherein the information indicates a PDU session corresponding to uplink data that is expected to arrive; and
sending a request message to a core network device, wherein the request message requests path switching of user plane data of a terminal device, and the request message comprises the information.

20. The method according to claim 19, wherein the request message further comprises at least either of the following:
a QFI corresponding to the uplink data that is expected to arrive; and
QoS parameter information corresponding to the uplink data that is expected to arrive.

21. A communication method, comprising:
obtaining information, wherein the information indicates an RRC state of a terminal device; and
sending a request message to a core network device, wherein the request message requests path switching of user plane data of the terminal device, and the request message comprises the information.

22. A communication system, wherein the communication system comprises an access network device and a core network device, wherein
the access network device is configured to perform the method according to any one of claims 1 to 9, the method according to claim 19 or 20, or the method according to claim 21; and
the core network device is configured to perform the method according to any one of claims 10 to 14.

23. A communication system, wherein the communication system comprises a first core network device and a second core network device, wherein
the first core network device is configured to perform the method according to claim 15 or 16, and the second core network device is configured to perform the method according to claim 17 or 18.

24. The communication system according to claim 23, wherein the communication system further comprises an access network device, wherein the access network device is configured to perform the method according to any one of claims 1 to 9, the method according to claim 19 or 20, or the method according to claim 21.

25. A communication apparatus, wherein the apparatus comprises a communication unit, wherein
the communication unit is configured to: receive first uplink data from a terminal device; and send a request message to a core network device, wherein the request message requests path switching of user plane data of the terminal device, the request message comprises first information, and the first information indicates a first PDU session corresponding to the first uplink data.

26. The apparatus according to claim 25, wherein the apparatus further comprises a processing unit, wherein the processing unit is configured to: determine a logical channel corresponding to the first uplink data; obtain indication information from a second access network device, wherein the indication information indicates that the logical channel corresponds to the first protocol data unit PDU session, or the indication information indicates a correspondence between the logical channel and the first PDU session; and determine, based on the logical channel corresponding to the first uplink data and the indication information, the first PDU session corresponding to the first uplink data.

27. The apparatus according to claim 25 or 26, wherein the communication unit is further configured to receive a radio resource control RRC connection resume request from the terminal device, wherein
the first uplink data and the RRC connection resume request are carried in a same message.

28. The apparatus according to any one of claims 25 to 27, wherein the request message further comprises at least one of the following:
a quality of service QoS flow identifier QFI corresponding to the first uplink data;
QoS parameter information corresponding to the first uplink data;
a data amount of the first uplink data;
a remaining uplink data amount of the first PDU session;
second information, wherein the second information indicates a second PDU session corresponding to uplink data that is expected to arrive;
a QFI corresponding to the uplink data that is expected to arrive;
QoS parameter information corresponding to the uplink data that is expected to arrive;
a remaining uplink data amount of a third PDU session; and
third information, wherein the third information indicates an RRC state of the terminal device.

29. The apparatus according to claim 28, wherein the apparatus further comprises a processing unit, wherein the processing unit is configured to: obtain the second information from the terminal device, wherein the second information is determined by the terminal device based on historical data transmission information of the second PDU session; or obtain historical data transmission information of the second PDU session from the second access network device, and determine the second information based on the historical data transmission information of the second PDU session.

30. The apparatus according to claim 28 or 29, wherein the communication unit is further configured to receive a buffer status report from the terminal device, wherein the buffer status report indicates the remaining uplink data amount of the first PDU session and/or the remaining uplink data amount of the third PDU session.

31. The apparatus according to any one of claims 25 to 30, wherein the communication unit is further configured to receive a response message of the request message from the core network device, wherein the response message comprises an identifier of an admitted PDU session and/or an identifier of a released PDU session.

32. The apparatus according to claim 31, wherein the admitted PDU session comprises the first PDU session; or the released PDU session comprises the first PDU session.

33. The apparatus according to any one of claims 25 to 32, wherein the first information comprises an identifier of the first PDU session.

34. A communication apparatus, wherein the apparatus comprises a communication unit and a processing unit, wherein
the communication unit is configured to receive a request message from an access network device, wherein the request message requests path switching of user plane data of a terminal device, the request message comprises first information, and the first information indicates a first PDU session corresponding to first uplink data; and
the processing unit is configured to determine an admitted PDU session and/or a rejected PDU session based on the request message.

35. The apparatus according to claim 34, wherein the request message further comprises at least one of the following:
a QFI corresponding to the first uplink data;
QoS parameter information corresponding to the first uplink data;
a data amount of the first uplink data;
a remaining uplink data amount of the first PDU session;
second information, wherein the second information indicates a second PDU session corresponding to uplink data that is expected to arrive;
a QFI corresponding to the uplink data that is expected to arrive;
QoS parameter information corresponding to the uplink data that is expected to arrive;
a remaining uplink data amount of a third PDU session; and
third information, wherein the third information indicates an RRC state of the terminal device.

36. The apparatus according to claim 34 or 35, wherein the communication unit is further configured to send a response message of the request message to the access network device, wherein the response message comprises an identifier of the admitted PDU session and/or an identifier of the rejected PDU session.

37. The apparatus according to claim 36, wherein the admitted PDU session comprises the first PDU session; or the released PDU session comprises the first PDU session.

38. The apparatus according to any one of claims 34 to 37, wherein the first information comprises an identifier of the first PDU session.

39. A communication apparatus, wherein the apparatus comprises a communication unit, wherein
the communication unit is configured to: receive a request message from an access network device, wherein the request message requests path switching of user plane data of a terminal device, the request message comprises first information, and the first information indicates a first PDU session corresponding to first uplink data; send the first information to a second core network device based on the request message; and receive an indication message from the second core network device, wherein the indication message indicates an admitted PDU session and/or a released PDU session.

40. The apparatus according to claim 39, wherein the communication unit is further configured to send, to the second core network device, at least one of the following:
a QFI corresponding to the first uplink data;
QoS parameter information corresponding to the first uplink data;
a data amount of the first uplink data;
a remaining uplink data amount of the first PDU session;
second information, wherein the second information indicates a second PDU session corresponding to uplink data that is expected to arrive;
a QFI corresponding to the uplink data that is expected to arrive;
QoS parameter information corresponding to the uplink data that is expected to arrive;
a remaining uplink data amount of a third PDU session; and
third information, wherein the third information indicates an RRC state of the terminal device.

41. A communication apparatus, wherein the apparatus comprises a communication unit, wherein
the communication unit is configured to: receive first information from a first core network device, wherein the first information indicates a first PDU session corresponding to first uplink data; and send indication information to the first core network device based on the first information, wherein the indication information indicates an admitted PDU session and/or a released PDU session.

42. The apparatus according to claim 41, wherein the communication unit is further configured to receive, from the first core network device, at least one of the following:
a QFI corresponding to the first uplink data;
QoS parameter information corresponding to the first uplink data;
a data amount of the first uplink data;
a remaining uplink data amount of the first PDU session;
second information, wherein the second information indicates a second PDU session corresponding to uplink data that is expected to arrive;
a QFI corresponding to the uplink data that is expected to arrive;
QoS parameter information corresponding to the uplink data that is expected to arrive;
a remaining uplink data amount of a third PDU session; and
third information, wherein the third information indicates an RRC state of the terminal device.

43. A communication apparatus, wherein the apparatus comprises a communication unit and a processing unit, wherein
the processing unit is configured to obtain information, wherein the information indicates a PDU session corresponding to uplink data that is expected to arrive; and
the communication unit is configured to send a request message to a core network device, wherein the request message requests path switching of user plane data of a terminal device, and the request message comprises the information.

44. The apparatus according to claim 43, wherein the request message further comprises at least either of the following:
a QFI corresponding to the uplink data that is expected to arrive; and
QoS parameter information corresponding to the uplink data that is expected to arrive.

45. A communication apparatus, wherein the apparatus comprises a communication unit and a processing unit, wherein
the processing unit is configured to obtain information, wherein the information indicates an RRC state of a terminal device; and
the communication unit is configured to send a request message to a core network device, wherein the request message requests path switching of user plane data of the terminal device, and the request message comprises the information.

46. A communication apparatus, comprising units configured to perform steps of the method according to any one of claims 1 to 21.

47. A communication apparatus, comprising at least one processor and an interface circuit, wherein the at least one processor is configured to: communicate with another apparatus through the interface circuit, and perform the method according to any one of claims 1 to 21.

48. A communication apparatus, comprising a processor, configured to invoke a program stored in a memory, to perform the method according to any one of claims 1 to 21.

49. A communication apparatus, wherein the apparatus is configured to perform the method according to any one of claims 1 to 21.

50. A computer-readable storage medium, comprising a program, wherein when the program is run by a processor, the method according to any one of claims 1 to 21 is performed.

51. A computer program product, wherein when a computer reads and executes the computer program product, the computer is enabled to perform the method according to any one of claims 1 to 21.
